# EUROPÄISCHE PATENTSCHRIFT

(11) **EP 3 630 421 B1**
(45) Veröffentlichungstag und Bekanntmachung des Hinweises auf die Patenterteilung: **12.06.2024**
(21) Anmeldenummer: 18728840.2
(22) Anmeldetag: 28.05.2018
(51) Int. Cl.: B25J 9/16, B23P 19/10, B25J 15/00, B65H 9/00, G05B 19/00

(54) **VERFAHREN ZUR AUSRICHTUNG ZWEIER WERKSTÜCKE ZUR AUSBILDUNG EINER FÜGEVERBINDUNG UND MANIPULATOR**
METHOD FOR ORIENTING TWO WORKPIECES TO FORM A JOINING CONNECTION AND MANIPULATOR
PROCÉDÉ D'ALIGNEMENT DE DEUX PIÈCES POUR FORMER UNE LIAISON D'ASSEMBLAGE ET MANIPULATEUR

(30) Priorität: 30.05.2017 DE 102017111800
(43) Veröffentlichungstag der Anmeldung: 08.04.2020
(73) Patentinhaber: Baosteel Lasertechnik GmbH, 88212 Ravensburg (DE)
(72) Erfinder: ALBER, Gerhard, 88276 Berg (DE)
(74) Vertreter: Otten, Roth, Dobler & Partner mbB Patentanwälte
(86) Internationale Anmeldenummer: PCT/EP2018/063954
(87) Internationale Veröffentlichungsnummer: WO 2018/219876

(56) Entgegenhaltungen:
- WO-A1-2009/112051
- WO-A1-2009/140977
- WO-A1-2012/163390
- DE-A1-102004 049 332
- DE-A1-102004 051 977
- DE-A1-102013 014 287
- US-A1- 2015 314 360
- US-A1- 2017 052 534

## Beschreibung

Die Erfindung betrifft ein Verfahren zur Ausrichtung zweier Werkstücke zur Ausbildung einer Fügeverbindung sowie einen Manipulator zur Ausführung eines derartigen Verfahrens.

Zur Herstellung von sogenannten Tailored Blanks werden typischerweise als Blechplatinen aus verschiedenen Werkstoffen bzw. Werkstoffgüten und/oder Blechdicken ausgebildete Werkstücke zusammengesetzt und durch Schweißen verbunden, um nachfolgend dann beispielsweise durch Tiefziehen umgeformt zu werden. Von der Automobilindustrie werden an den Leading Edge Offset (LEO) bzw. an den Tailing Edge Offset (TEO), also an den Versatz, welche die zu verbindenden Werkstücke nach dem Verschweißen an der führenden Kante bzw. der nachfolgenden Kante aufweisen, sehr hohe Anforderungen gestellt, die nur erfüllt werden können, wenn die beiden Werkstücke vor dem Schweißen sehr genau aufeinander ausgerichtet sind.

Aus dem Stand der Technik sind Verfahren zur Ausrichtung zweier Werkstücke zur Ausbildung einer Fügeverbindung bekannt, welche die nachfolgend genannten Schritte umfassen: Einlegen oder Vorhalten von mindestens zwei Werkstücken in einer Bereitstellungsstation, Greifen des ersten Werkstücks mit einem ersten Greifer, Greifen des zweiten Werkstücks mit einem zweiten Greifer und Entnehmen der Werkstücke aus der Bereitstellungsstation und Transport der Werkstücke zu einer Bearbeitungsstation. Mit derartigen Verfahren können die Anforderungen der Automobilindustrie bezüglich eines minimalen Versatzes zwischen den Werkstücken nicht erfüllt werden. Weiterhin sind aus dem Stand der Technik Manipulatoren bekannt, welche einen ersten Greifer und einen zweiten Greifer umfassen.

Weiterhin ist aus der DE 10 2004 049 332 A1 ein Verfahren zum automatischen Positionieren mindestens zweier Bauteile mittels einer Mehrzahl an Industrierobotern, wobei ein erster Positionierroboter ein erstes Bauteil in eine erste Fügestelle positioniert und ein zweiter Positionierroboter ein zweites Bauteil in eine zweite Fügestelle positioniert, bekannt.

Weiterhin ist aus der WO 2012/163390 A1 eine Erfindung bekannt die ein Handhabungswerkzeug umfasst, umfassend einen Rahmen, mindestens ein Greifelement, das an dem Rahmen angebracht und in mehreren Positionen in Bezug auf den Rahmen positionierbar ist, und Mittel zum Halten jedes Greifelements in einem verriegelten Zustand in mehreren Positionen; Mittel zum Lösen mindestens eines Greifelements des Handhabungswerkzeugs, so dass das Greifelement einen freigegebenen Zustand annimmt, in dem es in Bezug auf den Rahmen neu positioniert werden kann; und eine von dem Handhabungswerkzeug getrennte Neupositionierungseinheit, die angepasst ist, um mit dem Handhabungswerkzeug zu interagieren, wenn sich mindestens ein Greifelement in einem freigegebenen Zustand befindet, um das Greifelement in Bezug auf den Rahmen neu zu positionieren.

Aufgabe der Erfindung ist es, ein Verfahren und eine Vorrichtung vorzuschlagen, welche eine sehr genaue Ausrichtung der Werkstücke ermöglicht, ohne dass zwischen einer Bereitstellungsstation und einer Bearbeitungsstation eine Ausrichtungsstation angeordnet werden muss, welche jeweils für den Materialfluss durch einen Manipulator verkettet sind. Diese Aufgabe wird ausgehend von den Merkmalen des Oberbegriffs des Anspruchs 1 bzw. 13 durch die kennzeichnenden Merkmale des Anspruchs 1 bzw. 13 gelöst. In den jeweiligen Unteransprüchen sind vorteilhafte und zweckmäßige Weiterbildungen angegeben.

Bekannt sind Verfahren zur Ausrichtung zweier Werkstücke zur Ausbildung einer Fügeverbindung, welche insbesondere als flächige Werkstücke in Form von Platinen ausgebildet sind, umfasst die Schritte, dass in einem Längsausrichtungsschritt das erste Werkstück relativ zu dem zweiten Werkstück entlang mindestens einer der Werkstückkanten durch Linearbewegung mindestens eines der Greifer relativ zum jeweils anderen Greifer ausgerichtet wird und dass der Längsausrichtungsschritt während des Transports der Werkstücke von der Bereitstellungsstation zu der Bearbeitungsstation ausgeführt wird. Hierdurch wird die Aufgabe einer Ausrichtungsstation zur Ausrichtung der Werkstücke durch die ohnehin vorhandenen Greifer ausgeführt, so dass eine zusätzliche Handhabung der Werkstücke in einer Ausrichtungsstation sowie ein weiterer Transportschritt vermieden werden können. Dies bringt nicht nur den Vorteil einer Einsparung von Taktzeit mit sich, sondern bedeutet auch geringere Kosten für die Fertigungsanlage, da weder die erwähnte Ausrichtstation noch ein zusätzliches Transportsystem zwischen der Ausrichtungsstation und der Bearbeitungsstation erforderlich sind.

Erfindungsgemäß ist vorgesehen, dass der erste Greifer und der zweite Greifer an einem gemeinsamen Manipulator, bevorzugt an einem gemeinsamen Mehrachs-Roboter angeordnet sind und im Raum mittels dieses Manipulators gemeinsam von der Bereitstellungsstation zur Bearbeitungsstation bewegt werden. Hierdurch ist für den Transport zweier Werkstücke lediglich ein Manipulator ausreichend. Weiterhin ist durch die gemeinsame Anbindung der beiden Greifer an denselben Manipulator eine mechanische Kopplung der Greifer erreicht und somit eine exakte Quer- und Längsausrichtung der Werkstücke erleichtert.

Es ist weiterhin vorgesehen, das Verfahren so auszubilden,
dass vor dem Längsausrichtungsschritt in einem Querausrichtungsschritt
- eine erste Bewegung des ersten Greifers in Richtung des zweiten Greifers erfolgt und/oder
- eine erste Bewegung des zweiten Greifers in Richtung des ersten Greifers erfolgt,
- wobei es insbesondere vorgesehen ist, dass bei Bewegung der beiden Greifer die erste und die zweite Bewegung zeitgleich oder nacheinander ausgeführt werden und
- wobei es insbesondere vorgesehen ist, dass der Querausrichtungsschritt während des Transports der Werkstücke von der Bereitstellungsstation zu der Bearbeitungsstation ausgeführt wird. Hierdurch ist sichergestellt, dass die beiden Werkstücke vor dem Längsausrichtungsschritt bezüglich ihrer zur fügenden Längskanten parallel in x-Richtung (Richtung der auszubildenden Schweißnaht) ausgerichtet sind, so dass vor dem Verschweißen allenfalls noch eine technisch einfach und schnell realisierbare Zusammenschiebebewegung erfolgen muss.

Es ist weiterhin vorgesehen, das Verfahren so auszubilden, dass bei dem Querausrichtungsschritt das erste Werkstück mit der ersten Bewegung insbesondere mit seiner zu fügenden Längskante gegen einen ersten Anschlag (Queranschlag) angefahren wird, und diesen als erste Referenzposition berührt und das zweite Werkstück mit der ersten Bewegung insbesondere mit seiner zu fügenden Längskante gegen einen zweiten Anschlag (Queranschlag) angefahren wird, und diesen als erste Referenzposition berührt. Hierdurch wird auf einfache Weise eine parallel Ausrichtung der Werkstücke in Bezug auf sich gegenüber liegende Längskanten erreicht. Es ist vorgesehen, dass das Anfahren beider Werkstücke so erfolgt, dass diese sich beim Anfahren auch in einer Verschiebeebne, in welcher diese bewegt werden, verdrehen bzw. verschwenken können, sofern eine derartige Verdrehung bzw. Verschwenkung erforderlich ist, um eine linienförmige Anlage an dem ersten bzw. zweiten Anschlag zu erreichen. Hierbei ist es gemäß einer ersten Ausführungsvariante vorgesehen, dass eine derartige Verdrehung bzw. Verschwenkung durch einen motorischen Antrieb ausgeführt wird. Der motorische Antrieb ist dann derart ausgeführt, dass der Greifer um seine Hochachse wahlweise nach links oder nach rechts verdreht bzw. verschwenkt wird. Gemäß einer zweiten Ausführungsvariante ist es vorgesehen, dass die Platine gemeinsam mit dem Greifer durch äußere, auf die Platine wirkende Kräfte verdrehbar bzw. verschwenkbar ist. Hierzu ist der Greifer frei um seine Hochachse verdrehbar. Eine ggf. vorhandene Bremse oder Blockiereinrichtung ist bei dem Vorgang der Ausrichtung der Platine an einem Queranschlag gelöst, so dass der Greifer mit der Platine nach links bzw. rechts verdreht bzw. verschwenkt wird.

Es ist auch vorgesehen, das Verfahren derart auszubilden, dass nach dem Querausrichtungsschritt in dem Längsausrichtungsschritt eine zweite Bewegung des ersten Greifers in einer von der ersten Bewegung abweichenden, zur ersten Bewegung des ersten Greifers nicht-parallelen Richtung erfolgt und/oder dass eine zweite Bewegung des zweiten Greifers in einer von der ersten Bewegung abweichenden, zur ersten Bewegung des zweiten Greifers nicht-parallelen Richtung erfolgt, wobei es insbesondere vorgesehen ist, dass bei Bewegung beider Greifer die zweiten Bewegungen zeitgleich ausgeführt werden. Durch die Ausführung des Längsausrichtungsschritts nach dem Querausrichtungsschritt ist es leicht zu gewährleisten, dass eine korrekte Querausrichtung bei der Durchführung des Längsausrichtungsschritts nicht mehr verloren geht. Durch eine zeitgleiche Bewegung wird die Gesamtzeit der Bewegung kurz gehalten.

Weiterhin ist es vorgesehen, dass Verfahren derart auszubilden, dass bei dem Längsausrichtungsschritt
- bei der zweiten Bewegung des ersten Werkstücks das erste Werkstück gegen einen dritten Anschlag, welcher als Längsanschlag ausgebildet ist, angefahren wird, und insbesondere diesen als Referenzposition nutzt und
- bei der zweiten Bewegung des zweiten Werkstücks das zweite Werkstück gegen einen vierten Anschlag, welcher als Längsanschlag ausgebildet ist, angefahren wird, und insbesondere diesen als Referenzposition nutzt. Hierdurch wird die Längsausrichtung der beiden Werkstücke jeweils durch eine einzige Verfahrbewegung des Greifers bewirkt und kostet damit wenig Zeit. Hierbei sind der dritte und der vierte Anschlag jeweils als körperlicher Anschlag zur mechanischen Berührung oder als virtueller Anschlag berührungsfrei ausgebildet, durch welchen die Bewegung des Werkstücks exakt gestoppt wird.

Es ist auch vorgesehen, das Verfahren derart auszubilden, dass zu Beginn des Längsausrichtungsschritts vor der zweiten Bewegung des ersten Werkstücks und/oder vor der zweiten Bewegung des zweiten Werkstücks mindestens ein Messvorgang umfasst ist, wobei in dem Messvorgang eine erste Referenzposition am ersten Werkstück und eine zweite Referenzposition am zweiten Werkstück durch mindestens einen, vorzugsweise je einen Sensor erfasst wird und ein relativer Abstand in mindestens einer Raumrichtung zwischen der ersten und der zweiten Referenzposition ermittelt und gespeichert wird. Hierdurch können die Sensoren unabhängig von der tatsächlichen Position, welche die beiden Werkstücke einnehmen sollen angeordnet sein.

Weiterhin ist es vorgesehen, dass bei dem Verfahren zum Beenden des Längsausrichtungsschritts mindestens eine Bewegung eines der Greifer zur Ausrichtung eines der Werkstücke gegen ein berührungsloses Referenzmittel, insbesondere einen Positionssensor oder insbesondere einen virtuellen Anschlag erfolgt. Auf diese Weise kann die abschließende Längsausrichtung durch eine sanfte und damit genaue Verfahrbewegung des Greifers oder der Greifer erfolgen.

Weiter ist es vorgesehen, dass nach dem Längsausrichtungsschritt eine Offset-Position (Versatz) der Werkstücke insgesamt gemessen wird und die Greifer während des Transfers um die Offsetposition verfahren werden, wobei das Verfahren einer Transportbewegung überlagert ist oder in einer Transportpause (schwebend in Ruhe) ausgeführt wird. Hierdurch können Werkstücke unterschiedlichster Abmessungen gehandhabt und orientiert werden, ohne dass an den Greifern oder am Manipulator Anpassungen erfolgen müssen.

Es ist auch vorgesehen, dass der Manipulator bei der Ablage in der Bearbeitungsstation einen Offset (Versatz), bevorzugt in Längsrichtung korrigiert. Hierdurch müssen die Werkstückpaare nicht exakt im Greifer sondern nur relativ zueinander exakt vorliegen.

Weiterhin ist es bei dem Verfahren vorgesehen, dass die Werkstücke nach dem Längsausrichtungsschritt in der Bearbeitungsstation aneinander gefügt und insbesondere aneinander geschweißt werden, wobei das Verschweißen insbesondere durch ein Laserschweißverfahren ausgeführt wird. Mit diesen Schritten ist eine wirtschaftliche Fertigung von maßgeschneiderten Bauteilen aus hochgenau aufeinander ausgerichteten Werkstücken möglich.

Schließlich ist es vorgesehen, dass die Werkstücke als flächige Platinen, insbesondere Blechplatinen und bevorzugt Blechplatinen unterschiedlicher Dicke und/oder unterschiedlichen Materials ausgebildet sind. Derartige Werkstücke sind für das Verfahren besonders geeignet.

Bei dem Manipulator, welcher einen ersten Greifer und einen zweiten Greifer umfasst,
- wobei der Manipulator mechanische Anschlagmittel, insbesondere einen Rollenblock umfasst,
- wobei die mechanischen Anschlagmittel, insbesondere der Rollenblock zwischen den Greifern angeordnet ist,
- wobei die mechanischen Anschlagmittel zum dem ersten Greifer hin eine Anschlagkante definieren, wobei es insbesondere vorgesehen ist, dass der Rollenblock zu dem ersten Greifer hin wenigstens drei Rollen umfasst, welche mit ihren Laufflächen die Anschlagkante definieren,

- wobei die mechanischen Anschlagmittel zum dem zweiten Greifer hin eine Anschlagkante definierten, wobei es insbesondere vorgesehen ist, dass der Rollenblock zu dem zweiten Greifer hin wenigstens drei weitere Rollen umfasst, welche mit ihren Laufflächen die Anschlagkante definieren,
- wobei die definierten Anschlagkanten parallel zueinander ausgerichtet sind,
- wobei die Greifer jeweils parallel zu den Anschlagkanten längs in Richtung einer x-Achse verfahrbar sind,
- wobei die Greifer jeweils quer zu den Anschlagkanten quer in Richtung einer y-Achse verfahrbar sind und
- wobei die Greifer um eine senkrecht zu der x-Richtung und der y-Richtung stehende Hochachse verdrehbar sind. Mit einem derartigen Manipulator lassen sich Werkstücke beim Transport aufeinander ausrichten,
ist erfindungsgemäß vorgesehen, dass die Greifer in Richtung der quer verlaufenden y-Achse pneumatisch angetrieben sind und/oder wobei mindestens einer der Greifer in Richtung der längs verlaufenden x-Achse durch einen Servomotor oder einen Schrittmotor angetrieben ist. Durch die Verwendung von auf die unterschiedlichen Anforderungen angepassten Antrieben lässt sich der Manipulator kostengünstig herstellen.

Weiterhin ist es vorgesehen, dass an dem Manipulator jedem Greifer wenigstens ein Sensor, insbesondere ein messender Sensor zugeordnet ist, wobei der Sensor insbesondere als Flächensensor ausgebildet ist, welcher eine Fläche überwacht, und/oder dass wenigstens einer der Sensoren an dem Manipulator fixiert ist und mit dem Manipulator verfahrbar ist und/oder dass wenigstens einer der Sensoren ein unverfahrbarer Bestandteil der Fertigungsanlag ist, und/oder dass die insbesondere der als Rollenblock ausgebildeten mechanischen Anschlagmittel an jeder Anschlagkante in Längsrichtung in einen ersten Abschnitt und einen zweiten Abschnitt zweigeteilt sind und der erste und der zweite Abschnitt jeweils galvanisch voneinander getrennt sind, so dass ein an beiden Blockabschnitten anliegendes, elektrisch leitfähiges Werkstück elektrisch detektierbar ist. Ein derartiger Manipulator ermöglicht sowohl ein Ausrichten von Werkstücken als auch ein Überwachung bzw. Kontrolle der vorgenommenen Ausrichtschritte.

Schließlich ist es vorgesehen, dass der Manipulator einen Portalträger umfasst, wobei der Portalträger an den Manipulator angeflanscht ist und wobei der Portalträger zwischen dem Manipulator und den beiden Greifern angeordnet ist, wobei der Rollenblock ebenfalls an den Manipulator angeflanscht ist, derart, dass der Manipulator die Greifer und der Rollenblock gemeinsam bewegt und derart, dass der erste Greifer das erste Werkstück und der zweite Greifer das zweite Werkstück unabhängig voneinander relativ zu dem Portalträger und relativ zu dem an dem Portalträger fixierten Rollenblock bewegen. Dadurch, dass beide Werkstücke mittels der an demselben Manipulator angeordneten Greifer getragen werden und bewegt werden, kann das Ausrichten der beiden Werkstücke mit technisch einfachen Mitteln erfolgen.

Im Sinne der Erfindung werden unter Greifern Sauggreifer oder Magnetgreifer oder Kombinationen von Saug- und Magnetgreifern verstanden.

Im Sinne der Erfindung können Referenzposition Kanten der Werkstücke aber auch definierte Bohrungen in den Werkstücken oder Markierungen, wie zum Beispiel Farbmarkierungen oder Positionsnocken an den Werkstücken sein. Derartige Positionen können ebenfalls von Sensoren erfasst werden und zur Ausrichtung der Werkstücke zueinander die benötigten Messwerte des gegebenen Versatzes liefern.

Im Sinne der Erfindung ist unter dem als "während dem Transport" bezeichneten Zeitraum der Zeitraum zu verstehen, welcher zwischen der Entnahme der Werkstücke aus der Bereitstellungsstation und der Ablage der Werkstücke in die Bearbeitungsstation liegt. Es ist dabei nicht vorgesehen, dass die Werkstücke permanent in Bewegung sind, jedoch ist eine Ablage der Werkstücke in eine Station während des Transports nicht möglich. Die Werkstücke verbleiben während des Transports stets am Manipulator angeordnet.

Unter einem "virtuellen Anschlag" ist im Sinne der Erfindung u.a. auch eine vorgegebene Position eines Stellmotors/Schrittmotors zu verstehen, welche z.B. durch einen gemessenen Distanzwert (Offset) vorgegeben wird.

Im Sinne der Erfindung wird unter einer zeitgleichen Ausführung eines Querausrichtungsschritts und/oder eine Längsausrichtungsschritts verstanden, dass in wenigstens einem Zeitintervall beide Greifer verfahren werden.

Weitere Einzelheiten der Erfindung werden in der Zeichnung anhand eines schematisch dargestellten Ausführungsbeispiels beschrieben.

Hierbei zeigt:
- Figur 1:: eine schematische Ansicht eines Teils einer ersten Ausführungsvariante einer Fertigungsanlage zur Herstellung von maßgeschneiderten Bauteilen aus zwei Werkstücken, wobei die Fertigungsanlage einen Manipulator, eine Bereitstellungsstation und eine Bearbeitungsstation umfasst;
- Figur 2 bis 9:: acht Momentaufnahmen aus dem Verfahrensablauf jeweils in Draufsicht auf die in der Figur 1 ausschnittsweise dargestellt erste Ausführungsvariante der Fertigungsanlage und
- Figur 10:: eine schematische Ansicht eines Teils einer weiteren Ausführungsvariante einer Fertigungsanlage zur Herstellung von maßgeschneiderten Bauteilen aus zwei Werkstücken, wobei die Fertigungsanlage einen Manipulator, eine Bereitstellungsstation und eine Bearbeitungsstation umfasst.

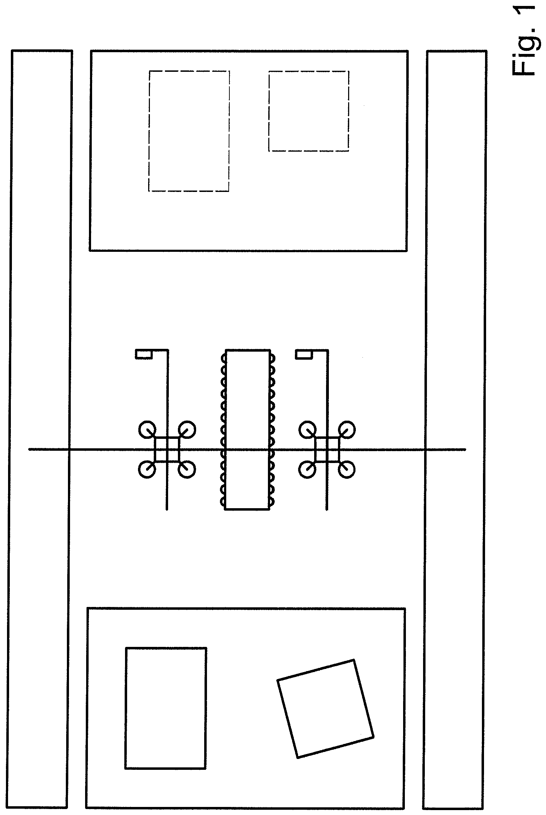

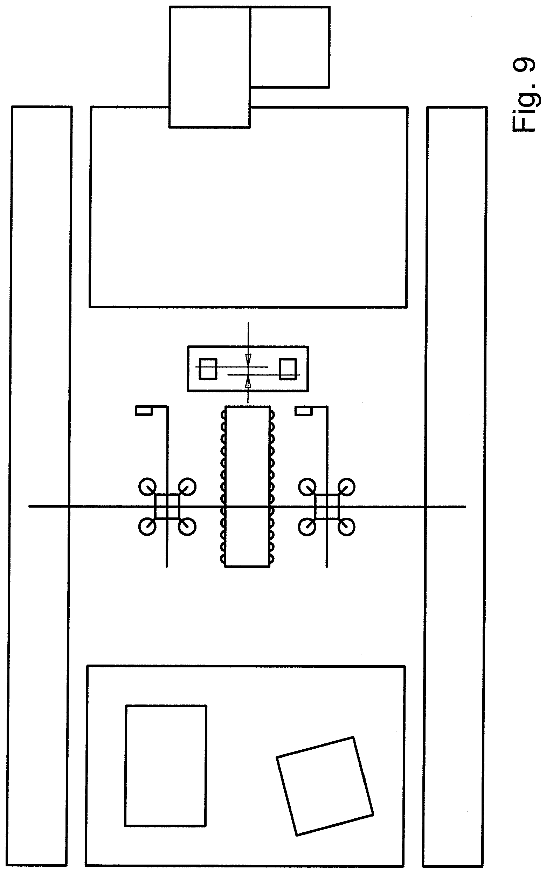

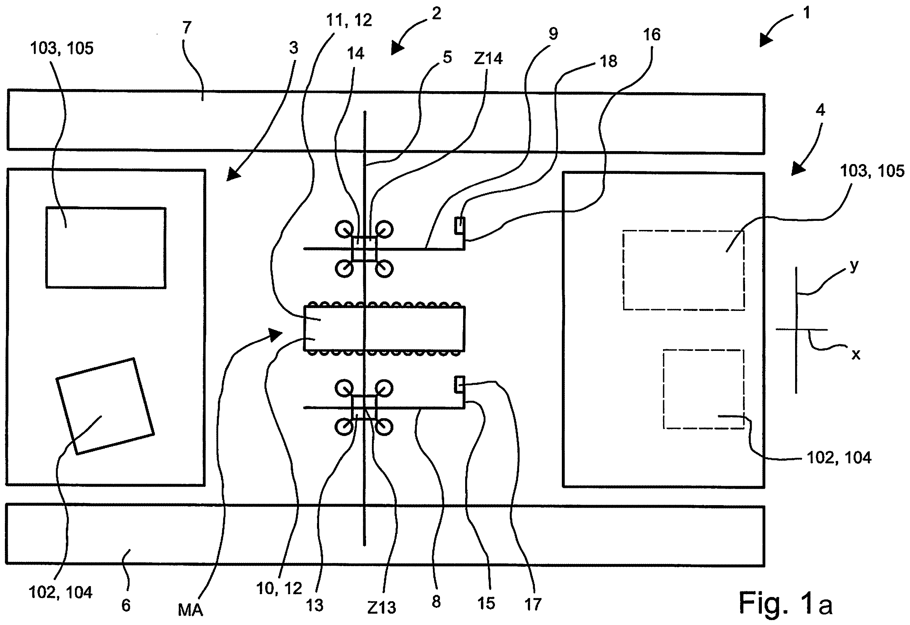

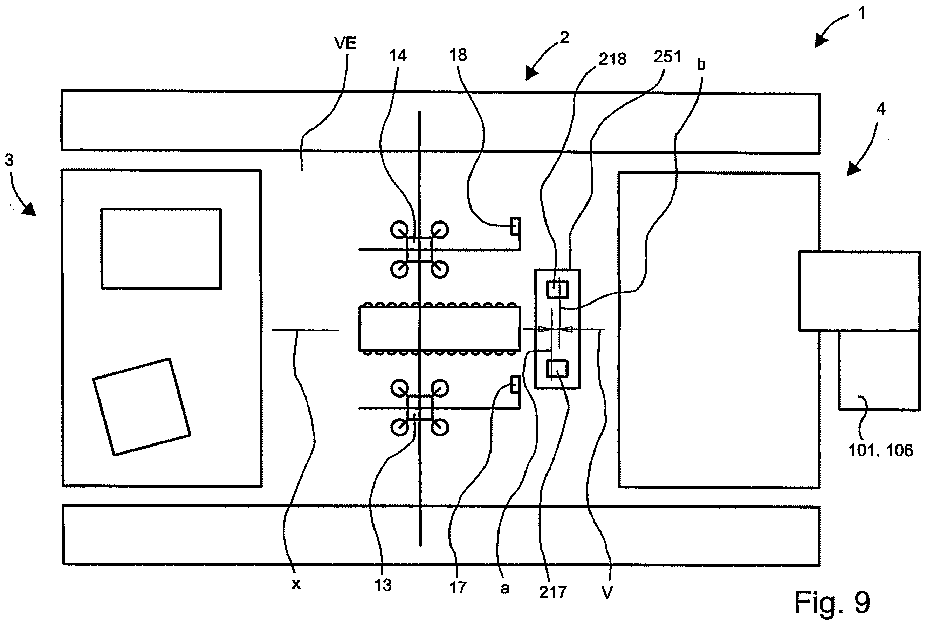

In der Figur 1 ist in schematischer Draufsicht ein Teil einer ersten Ausführungsvariante einer Fertigungsanlage 1 zur Herstellung von maßgeschneiderten Bauteilen 101 (siehe Figur 9) aus flächigen Werkstücken 102, 103 gezeigt, wobei die Werkstücke als Platinen 104, 105 ausgeführt sind und zu einem maßgeschneiderten Blech 106 (siehe Figur 9) verschweißt werden. Die Fertigungsanlage 1 umfasst einen Manipulator 2, eine Bereitstellungsstation 3 und einer Bearbeitungsstation 4.

Der Manipulator 2 dient grundsätzlich zum Transport der Werkstücke 102, 103 von der Bereitstellungsstation 3 in die Bearbeitungsstation 4, wobei in der Figur 1 in der Bearbeitungsstation 4 mit gestrichelten Linien angedeutet ist, wo die Werkstücke 102, 103 von dem Manipulator 2 in der Bearbeitungsstation 4 abgelegt werden.

Der Manipulator 2 umfasst einen Portalträger 5, welcher auf Schienen 6, 7 entlang einer x-Achse verfahrbar ist. Der Manipulator 2 umfasst mechanische Anschlagmittel MA, welche an dem Portalträger 5 zwischen zwei Längstraversen 8, 9 angeordnet sind. Die mechanischen Anschlagmitteln MA umfassen einen ersten Anschlag 10 und einen zweiten Anschlag 11, wobei die Anschläge 10, 11 als Queranschläge 12 ausgebildet sind. Die Längstraversen 8, 9 sind entlang einer y-Achse an dem Portalträger 5 verfahrbar und tragen Greifer 13, 14, welche entlang der x-Achse an den Längstraversen 8, 9 verfahrbar und jeweils um senkrecht auf der Zeichnungsebene und orthogonal zu der x-Achse und der y-Achse ausgerichtet z-Achsen Z13 bzw. Z14 bzw. Hochachsen gegenüber der jeweils zugeordneten Längstraverse 8, 9 verdrehbar bzw. verschwenkbar sind und bevorzugt in Richtung der zugeordneten z-Achsen Z13 bzw. Z14 absenkbar und anhebbar sind. An den Längstraversen 8, 9 ist jeweils zu der Bearbeitungsstation 4 hin an einem Halterarm 15, 16 ein Sensor 17, 18 aufgehängt. Gemäß einer nicht dargestellten Ausführungsvariante ist es vorgesehen, dass der bzw. die erwähnten Sensoren nicht an dem Manipulator angeordnet ist bzw. sind, sondern in der Fertigungsanlage feststehend angeordnet ist bzw. sind, so dass der Manipulator die erste Platine und/oder die zweite Platine beim Transport von der Bereitstellungsstation zu der Bearbeitungsstation durch einen Überwachungsbereich des wenigstens einen Sensors bewegt. Eine derartige Ausführungsvariante ist in der Figur 9 schematisch als Alternative dargestellt.

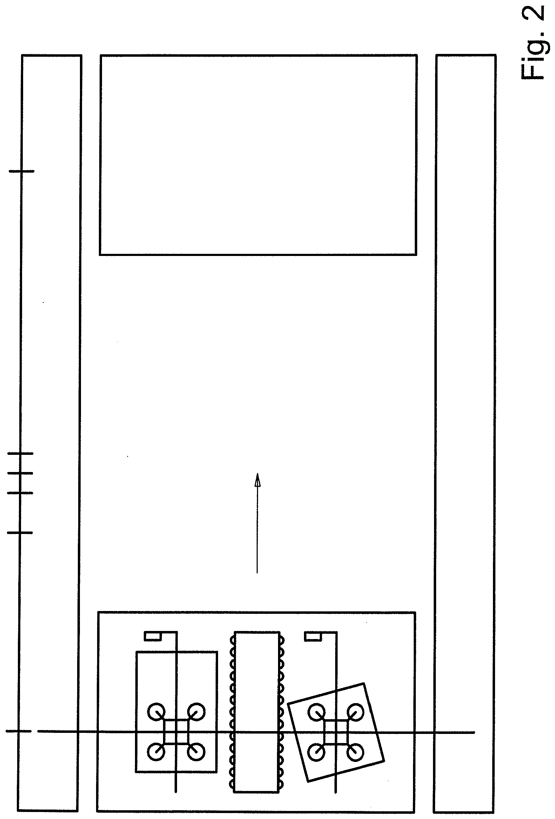

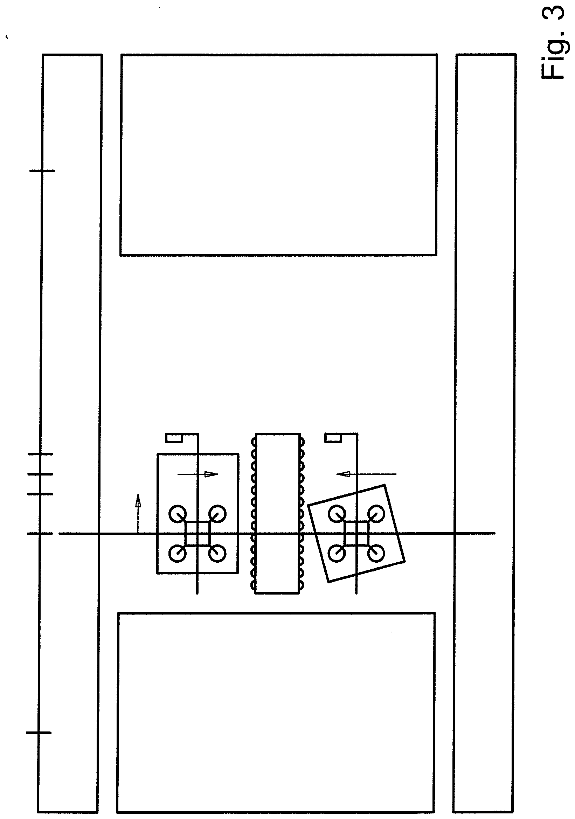

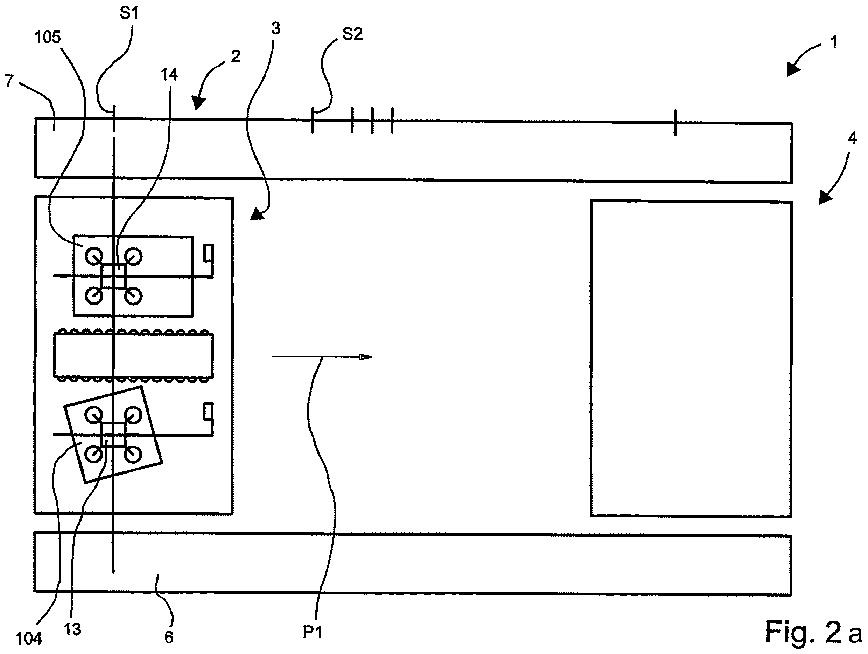

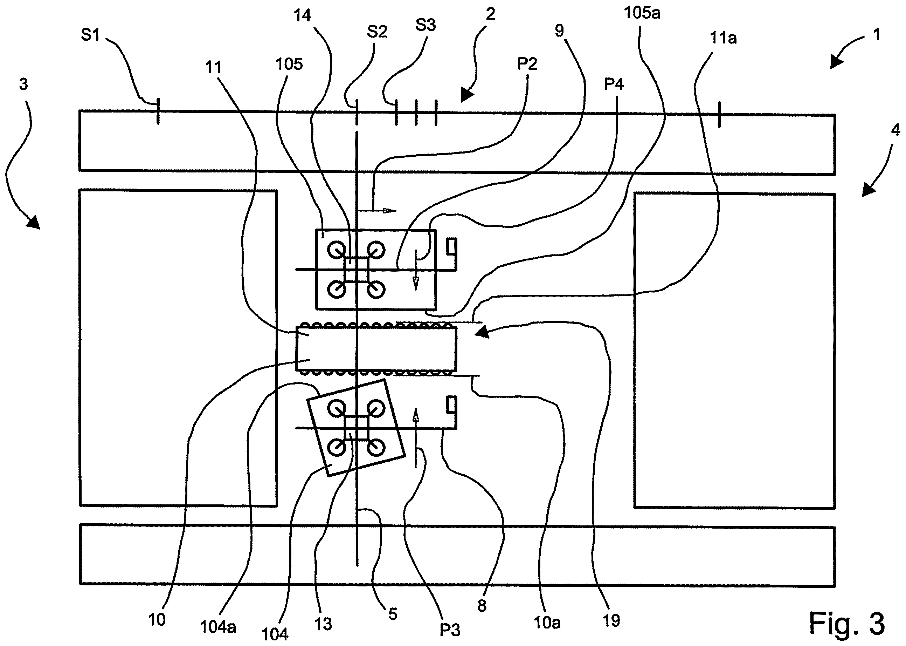

In der Figur 2 ist in einer ersten Momentaufnahme nun gezeigt wie der Manipulator 2 auf den Schienen 6, 7 über die Bereitstellungsstation 3 gefahren ist und mit seinem Greifer 13 die Platine 104 und mit seinem Greifer 14 die Platine 105 angesaugt und angehoben hat, so dass diese mit dem Greifer 13 bzw. 14 transportiert und bewegt werden können. Mit einem Pfeil P1 ist angedeutet, dass sich der Manipulator 2 zusammen mit den gegriffenen Platinen 13, 14 nun aus seiner Stellung S1 in eine Stellung S2 bewegt, in welcher dieser dann in der Figur 3 gezeigt ist. Gemäß einer nicht dargestellten Ausführungsvariante ist es auch vorgesehen, dass die Greifer statt pneumatischen Saugern Elektromagnete umfassen, um die Platinen zu greifen. In einer weiteren Ausführungsvariante ist es vorgesehen, dass die Greifer pneumatische Sauger und Elektromagnete umfassen.

In der Figur 3 ist in einer zweiten Momentaufnahme nun gezeigt wie der Manipulator 2 die erwähnte Stellung S2 erreicht hat, wobei die Platinen 13, 14 auf dem Weg von der Stellung S1 in die Stellung S2 noch nicht relativ zu dem Portalträger 5 des Manipulators 2 bewegt wurden. Mit einem Pfeil P2 ist angedeutet, dass sich der Manipulator 2 nun weiter in eine Stellung S3 bewegt und sich hierbei entsprechend Pfeilen P3 und P4 auch die Greifer 13, 14 zusammen mit den Längsträgern 8, 9 und den an den Greifern 13, 14 haftenden Platinen 104, 105 in Richtung des ersten Anschlags 10 und in Richtung des zweiten Anschlags 11 bewegt werden, um während der Verfahrbewegung des Manipulators 2 entlang der X-Achse in Richtung der Bearbeitungsstation 4 einen Querausrichtungsschritt auszuführen.

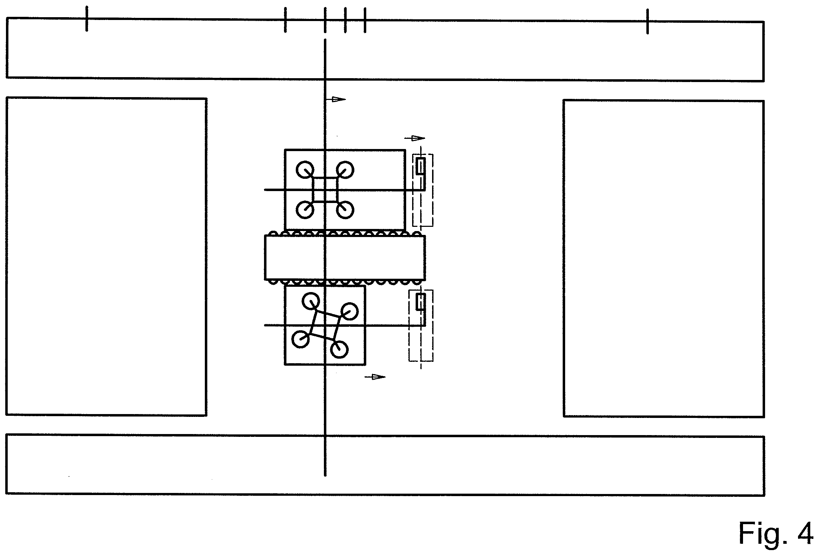

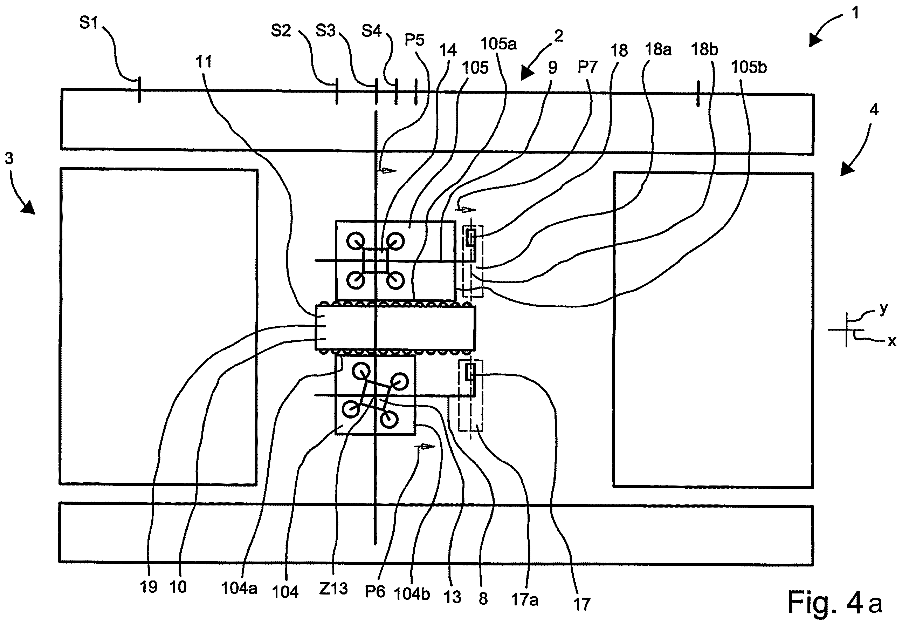

In der Figur 4 ist in einer dritten Momentaufnahme nun gezeigt wie der zwischen den Stellungen S2 und S3 erfolgende Querausrichtungsschritt bereits abgeschlossen ist. Dies zeigt sich dadurch, dass die Platine 104 mit einer zu fügenden Längskante 104a bzw. Werkstückkante (siehe auch Figur 3) an dem ersten Anschlag 10 des Manipulators 2 anliegt und dass die Platine 105 mit einer zu fügenden Längskante 105a bzw. Werkstückkante (siehe Figur 3) an dem zweiten Anschlag 11 des Manipulators 2 anliegt. Hierbei wurde die zweite Platine 105 lediglich linear in Richtung der y-Achse an den zweiten Anschlag 11 angefahren. Bei der ersten Platine 104 erfolgte beim Anfahren an den ersten Anschlag 10 auch eine Drehung der Platine 104 im Uhrzeigersinn um etwa 15°, da die erste Platine 104 in der Bereitstellungsstation 3 mit ihrer zu fügenden Längskante 104a gegenüber dem ersten Anschlag 10 schräg ausgerichtet war. Entsprechen wurde der erste Greifer 13 bei dem beschriebenen Querausrichtungsschritt im Rahmen einer Zwangsbewegung beim Anschwimmen der ersten Platine 104 an den ersten Anschlag um 15° im Uhrzeigersinn um seine z-Achse Z13 verdreht. Diese Drehung kann alternativ auch als aktive Bewegung durch einen Drehantrieb ausgeführt werden. Wie mit Pfeilen P5, P6, P7 in der Figur 4 angedeutet ist, bewegt sich der Manipulator 2 mit den Platinen 104, 105 nun weiter in eine Stellung S4, wobei während dieser Bewegung auch die Platinen 104, 105 von den Greifern 13, 14 in Richtung der x-Achse entlang den Anschlägen 10, 11 an den Längstraversen 8, 9 in Richtung der Bearbeitungsstation 4 verfahren werden. Entsprechend werden die Platinen 104, 105 nun von den Greifern 13, 14 mit ihren Führungskanten 104b bzw. 105b auf die nach unten (in die Zeichnungsebene hinein) gerichteten Sensoren 17, 18 zu und in deren Überwachungsbereiche 17a bzw. 18a bewegt.

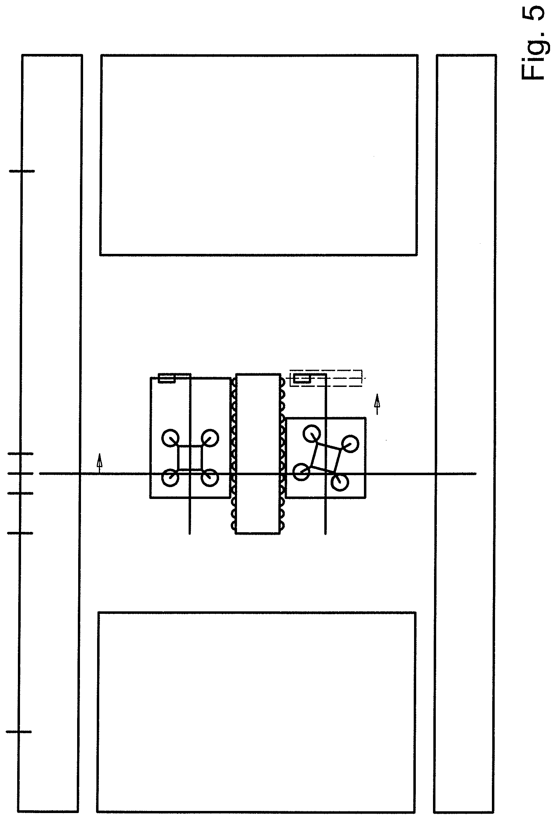

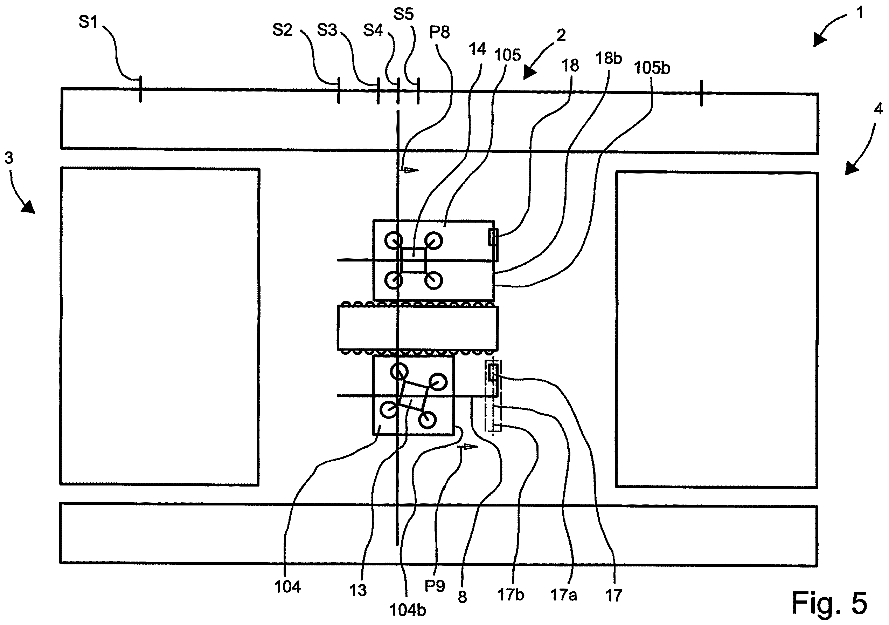

In der Figur 5 ist in einer vierten Momentaufnahme nun gezeigt wie die Bewegung des Greifers 14 von dem Sensor 18 gestoppt wird, wenn die zweite Platine 105 mit ihrer Führungskante 105b in dem Überwachungsbereich 18a eine definierte Position 18b (siehe auch Figur 5) erreicht hat. Die definierte Position 18b bildet einen vierten Anschlag, welcher als virtueller Anschlag bzw. virtueller Längsanschlag ausgebildet ist. Mit Pfeilen P8 und P9 ist angedeutet, dass auf dem Weg des Manipulators 2 von der Stellung S4 in die Stellung S5 der Greifer 13 weiter an der Längstraverse 8 verfährt, um die Führungskante 104b der ersten Platine 104 in einen Überwachungsbereich 17a des Sensors 17 zu bewegen.

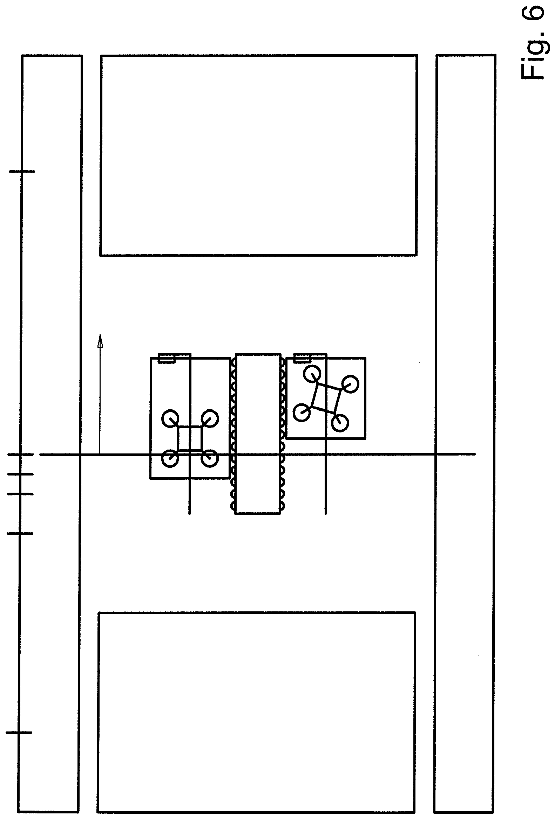

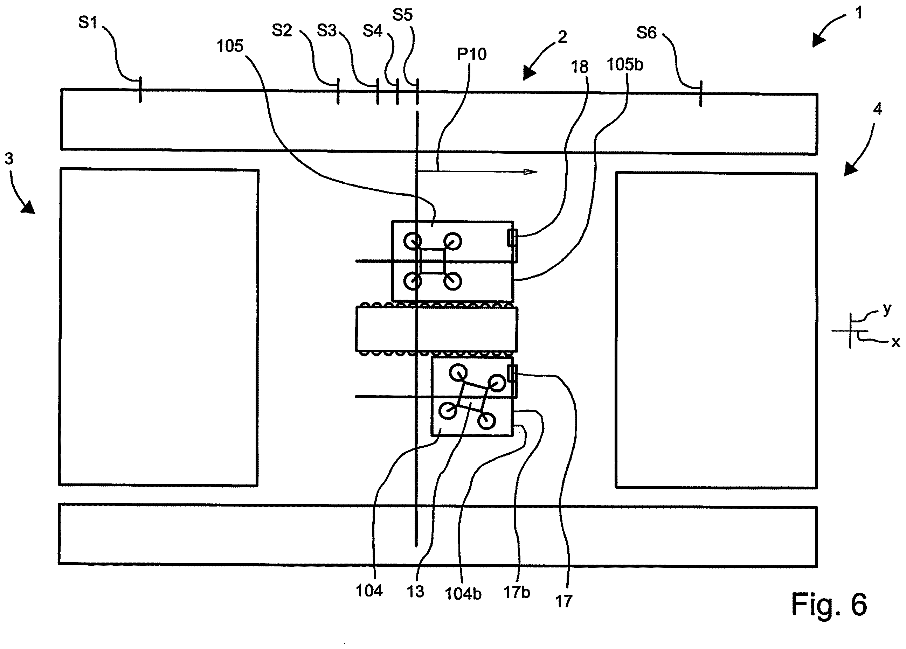

In der Figur 6 ist in einer fünften Momentaufnahme nun gezeigt wie die Bewegung des Greifers 13 von dem Sensor 17 gestoppt ist, wenn die erste Platine 104 in dem Überwachungsbereich 17a (siehe Figur 5) mit ihrer Führungskante 104b eine definierte Position 17b (siehe Figur 5) erreicht hat. Die definierte Position 17b bildet einen dritten Anschlag, welcher als virtueller Anschlag bzw. virtueller Längsanschlag ausgebildet ist.

Sofern die Sensoren 17, 18 derart exakt zueinander positioniert sind, dass die Führungskanten 104b und 105b der Platinen 104, 105 nun sprungfrei ineinander übergehen, wenn die Platinen 104, 105 quer zu der x-Achse in entlang der y-Achse zusammengeschoben werden, dann kann der Manipulator 2, wie dies mit dem Pfeil P10 angedeutet ist, mit den Platinen 104, 105 aus der Stellung S5 weiter in eine Stellung S6 fahren.

Sofern zwischen den Platinen noch ein Versatz gegeben ist oder ein Offset korrigiert werden soll, können die Platinen unabhängig voneinander und relativ zueinander von den Greifern entlang der x-Achse verfahren werden, so dass die gewünschte Ausrichtung der Platinen erreicht wird. Ggf. ist es auch ausreichend, wenn nur eine Platine verfahren wird. Weiterhin ist es wahlweise vorgesehen, dass das Verfahren sensorüberwacht erfolgt oder dass ein Antrieb des ersten Greifers und/oder ein Antrieb des zweiten Greifers entsprechend angesteuert wird, um die Platine in eine gewünschte Position zu bringen. Alle erwähnten Verfahrbewegungen können sowohl erfolgen während sich der Portalträger des Manipulators bewegt als auch erfolgen während sich der Portalträger des Manipulators im Stillstand befindet.

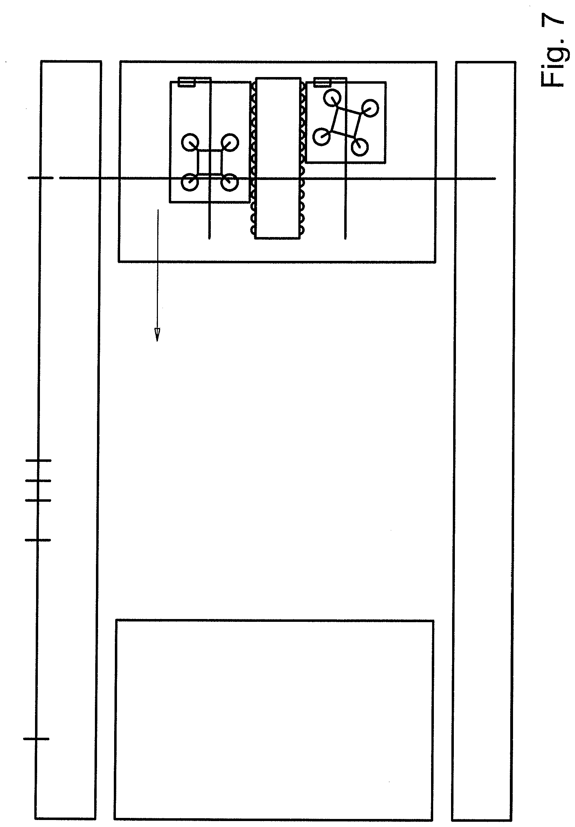

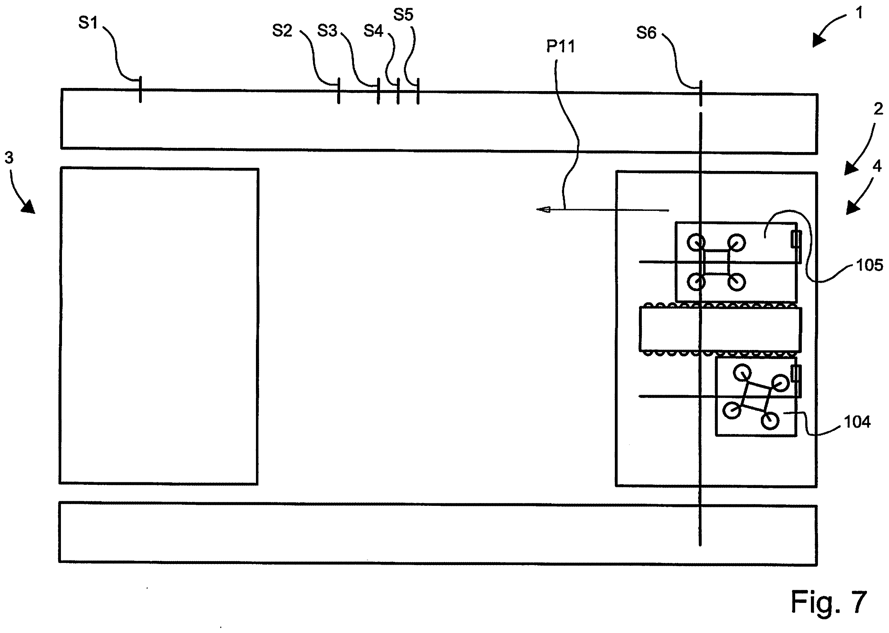

In der Figur 7 ist in einer sechsten Momentaufnahme nun gezeigt wie der Manipulator 2 mit den Platinen 104, 105 nun bei der Bearbeitungsstation 4 angekommen ist und die Platinen 104, 105 dort abgesetzt hat. Mit einem Pfeil P11 ist angedeutet, dass der Manipulator 2 in einem nächsten Schritt wieder in Richtung der Bereitstellungsstation 3 zurückfährt, um weitere Platinen zu handhaben.

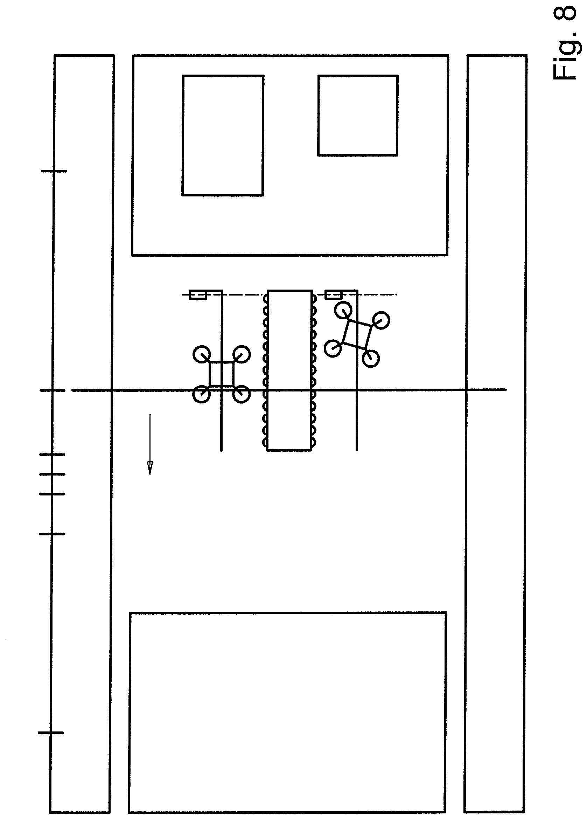

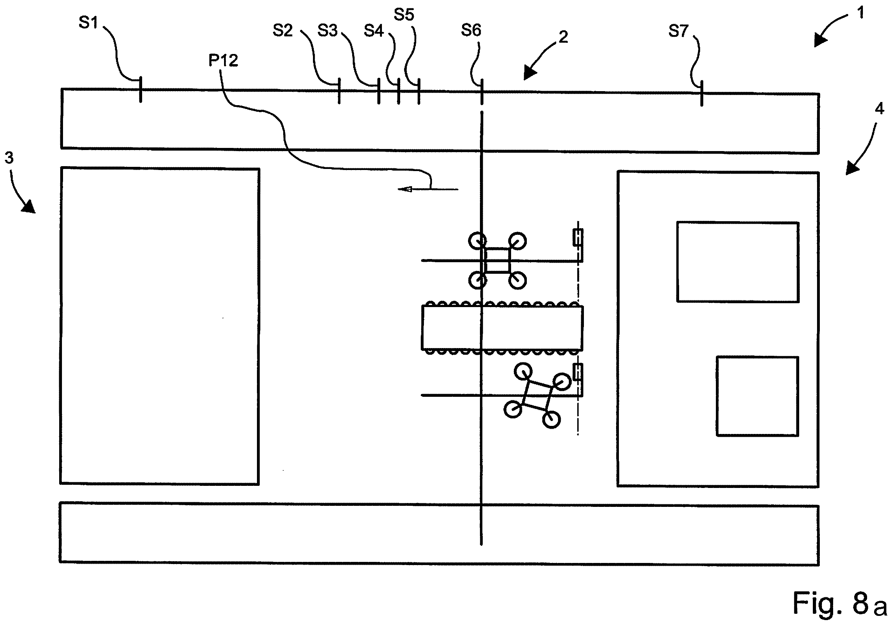

In der Figur 8 ist in einer siebten Momentaufnahme nun gezeigt wie sich der Manipulator 2 auf seinem Rückweg in einer Stellung S7 befindet und die abgelegten Platinen 104, 105 noch in der Bearbeitungsstation 4 liegen. Mit einem Pfeil P12 ist angedeutet, dass der Manipulator 2 weiter in Richtung der Bereitstellungsstation 3 zurück fährt.

In der Figur 9 ist in einer achten Momentaufnahme nun gezeigt wie der Manipulator 2 weiter in Richtung der Bereitstellungsstation 3 verfahren ist, wobei die Platinen 104, 105 in der Bearbeitungsstation 4 zwischenzeitlich zusammengeschoben und zu dem oben erwähnten maßgeschneiderten Blech 106 verschweißt wurden und von einem nicht dargestellten Manipulator abtransportiert werden.

In der Figur 9 ist zusätzlich eine Ausführungsvariante dargestellt, bei welcher die Fertigungsanlage 1 alternativ zu den mit dem Manipulator 2 verfahrenden Sensoren 17 und 18 ortsfeste Sensoren 217 und 218 umfasst. Diese Sensoren 217, 218 sind als messende Sensoren ausgebildet und in einer Trägereinheit 251 angeordnet. Die Trägereinheit 251 ist unter einer Verfahrebene VE, in welcher der Manipulator 2 Werkstücke bzw. Platinen verfährt, positioniert. Indem der Sensor 217 eine Führungskante einer ersten Platine zum Beispiel mit einer Koordinate a und der Sensor 218 eine Führungskante einer zweiten Platine zum Beispiel mit einer Koordinate b erfasst, wird auf der Basis der Koordinaten a, b von einer nicht dargestellten Kontrolleinrichtung der Fertigungsanlage 1 ein Versatz V zwischen den erwähnten Führungskanten der Platinen ermittelt. Auf der Basis dieses Versatzen V wird entweder ein Steuerbefehl für einen x-Antrieb des ersten Greifers 13 oder ein Steuerbefehl für einen x-Antrieb des zweiten Greifers 14 oder für einen x-Antrieb des ersten Greifers 13 und einen x-Antrieb des zweiten Greifers 14 berechnet und an den bzw. die x-Antriebe übermittelt, so dass sich die Stellung, welche die beiden Platinen zueinander einnehmen, derart in Richtung der x-Achse bzw. der Orientierung von zu fügenden Längskanten der Platinen verändert, dass diese von dem Manipulator 2 versatzfrei gehalten werden. Dies bedeutet, dass die Führungskanten der beiden Platinen nach einer Eliminierung des Versatzes V auf einer Geraden liegen.

Gemäß einer Ausführungsvariante ist es im Verfahrensablauf vorgesehen, dass das Ergebnis einer durch wenigstens einen der x-Antriebe erfolgten Korrektur durch die Sensoren 217, 218 oder weitere Sensoren kontrolliert wird und ggf. eine nochmalige Korrektur, Eliminierung eines Versatzes, vorgenommen wird.

Grundsätzlich ist zur Figurenbeschreibung anzumerken, dass die dargestellten und beschriebenen Momentaufnahmen bzw. Stellungen nicht zwangsweise implizieren, dass sich der Manipulator und/oder die Längstraversen und/oder die Greifer im Stillstand befinden. Das Verfahren sieht vielmehr vor, dass sich der Manipulator und/oder die Längstraversen und/oder die Greifer auf dem Weg von der Bereitstellungsstation in die Bearbeitungsstation sanft und ruckfrei bewegen. Hierdurch kann die Taktzeit gering gehalten werden und hierdurch können störende Beschleunigungskräfte vermieden werden.

Aus den Figuren 3 und 4 ist ersichtlich, dass der erste Anschlag 10 und der zweite Anschlag 11 durch einen Rollenblock 19 realisiert sind, bei welchem eine Vielzahl von nebeneinander angeordneten Rollen eine gedachte Anschlagkante 10a bzw. 11a bilden. Hierdurch ist ein Anschwimmen der Platinen 104 bzw. 105 möglich, da durch die Rollen ein Verkanten der Längskante 104a der Platine 104 bzw. der Längskante 105a der Platine 105 wirksam verhindert wird.

Die Sensoren 17, 18 und die weiteren erwähnten Sensoren sind vorzugsweise als messende Sensoren, sogenannte Liniensensoren, ausgeführt, durch welche die Führungskante der Platinen erfasst wird. Alternativ oder kumulativ ist es auch vorgesehen, dass Referenzpunkte und/oder die Folgekante bzw. die hintere Kante der Platinen erfasst wird. Um möglichst wenig Einstellarbeiten vornehmen zu müssen, ist es auch vorgesehen, einen oder mehrere Sensoren anzuordnen, um einen Offset zu erfassen und beim Übergeben der Platinen in die Bearbeitungsstation dann entsprechend korrigierend einzugreifen.

Abhängig von der Geometrie der Werkstücke bzw. Platinen ist es vorgesehen, die Greifer auch relativ zueinander zu verfahren, um Verfahrzeiten zu minimieren, wobei das relative Verfahren dadurch erfolgen kann, dass nur einer der beiden Greifer verfahren wird oder dass die Greifer mit unterschiedlichen Geschwindigkeiten und/oder in unterschiedliche Richtungen Verfahren werden.

Durch das beschriebene Verfahren wird bei entsprechender Auslegung der Komponenten erreicht, dass die Platinen des maßgeschneiderten Blechs einen Kantenversatz von +/- < 0,3mm aufweisen.

Im Verfahrensablauf ist es auch vorgesehen, dass zur Beibehaltung einer Position des bzw. der Werkstücke die Freiheitsgrade des Manipulators wenigstens teileweise blockiert werden. Insbesondere ist es vorgesehen, dass wenigstens eine der Längstraversen 8, 9 am Portalträger verriegelt wird und/oder dass wenigsten einer der Greifer an der jeweils zugehörigen Längstraverse bezüglich eine Bewegung in Richtung der x-Achse und/oder bezüglich eine Hubbewegung in Richtung seiner Hochachse bzw. Z-Achse verriegelt wird.

Durch den Manipulator erfolgt ein definiertes Ablegen der Platinen in der Bearbeitungsstation bzw. eine definierte Übergabe zur Bearbeitung, so dass in der Bearbeitungsstation auf eine weitere aktive Ausrichtung der Platinen verzichtet werden kann.

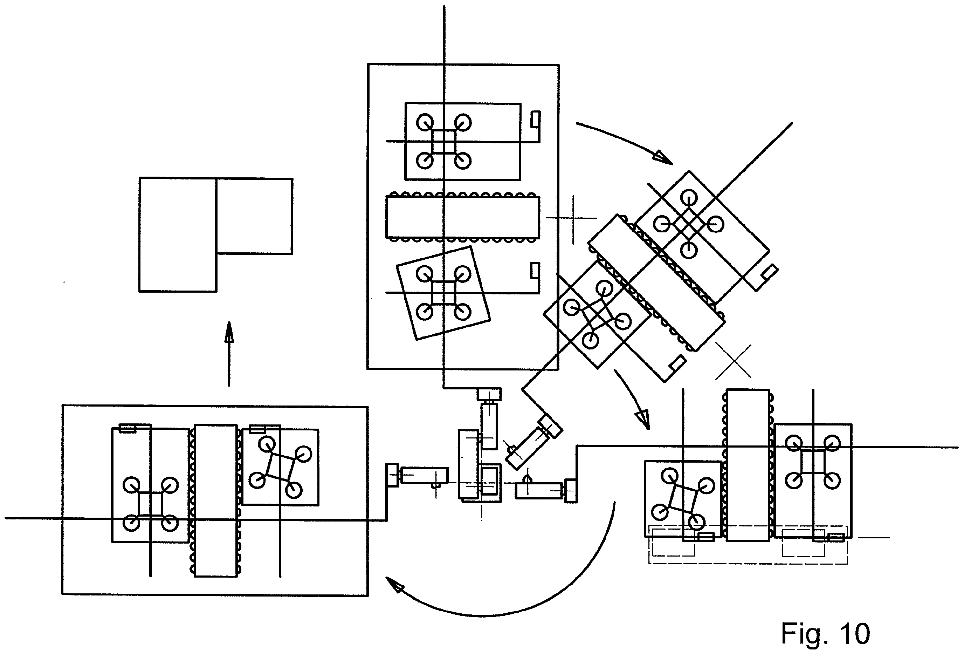

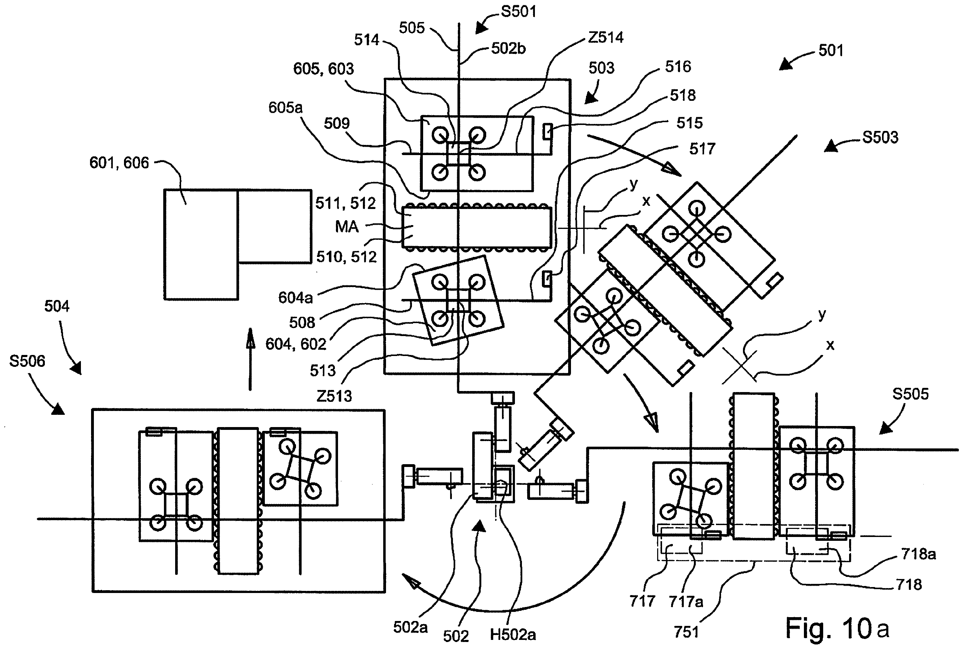

In der Figur 10 ist in schematischer Draufsicht ein Teil einer weiteren Ausführungsvariante einer Fertigungsanlage 501 zur Herstellung von maßgeschneiderten Bauteilen 601 aus flächigen Werkstücken 602, 603 gezeigt, wobei die Werkstücke 602, 603 als Platinen 604, 605 ausgeführt sind und zu einem maßgeschneiderten Blech 606 verschweißt werden. Die Fertigungsanlage 501 umfasst einen Manipulator 502, eine Bereitstellungsstation 503 und einer Bearbeitungsstation 504.

Der Manipulator 502 dient grundsätzlich zum Transport der Werkstücke 602, 603 von der Bereitstellungsstation 503 in die Bearbeitungsstation 504. Der Manipulator 502 umfasst einen Mehrachsroboter 502a und eine Handhabungseinrichtung 502b, die an dem Mehrachsroboter 502a angekuppelt ist und von diesem im Raum bewegt wird. Die Handhabungseinrichtung 502b umfasst einen Portalträger 505. Die Handhabungseinrichtung 502b wird von dem Mehrachsroboter 502a von einer auf die Bereitstellungsstation 503 ausgerichteten Stellung S501 um 270° im Uhrzeigersinn bis in eine auf die Bearbeitungsstation 504 ausgerichtete Stellung S506 um eine senkrecht auf der Zeichnungsebene stehende Hochachse H502a des Mehrachsroboters 502a geschwenkt. Um die Handhabungseinrichtung 502b aus der Stellung S506 wieder in die Stellung S501 zu bringen, schwenkt der Mehrachsroboter 502a die Handhabungseinrichtung 502b entweder um weiter 90° im Uhrzeigersinn oder bewegt diese um 270° gegen den Uhrzeigersinn zurück. In der Figur 10 ist der Manipulator 502 in vier unterschiedlichen Stellungen S501, S503, S505 und S506 gezeigt, wobei der Mehrachsroboter 502a nur in der Stellung S501 vollständig dargestellt ist. In den übrigen Stellungen ist der Mehrachsroboter 502a zur Erhaltung der Übersichtlichkeit nur ausschnittsweise abgebildet. Der Mehrachsroboter 502a kann auch die horizontale Lage, welche die Handhabungseinrichtung 502b in der Figur 10 im Raum einnimmt, verändern, um diese zum Beispiel an weiteren, nicht dargestellten Bestandteilen der Fertigungsanlage 501 vorbeizubewegen. Weiterhin kann der Mehrachsroboter 502a die Handhabungseinrichtung 502b auch in einer nicht dargestellten Wechselstation ablegen und eine andere Handhabungseinrichtung greifen, welche zur Handhabung anderer Werkstücke geeignet ist. Die Handhabungseinrichtung 502b umfasst mechanische Anschlagmittel MA, welche an dem Portalträger 505 zwischen zwei Längstraversen 508, 509 angeordnet sind. Die mechanischen Anschlagmitteln MA umfassen einen ersten Anschlag 510 und einen zweiten Anschlag 511, wobei die Anschläge 510, 511 als Queranschläge 512 ausgebildet sind. Bezüglich der Ausführung der mechanischen Anschlagmittel MA wird auch auf die Beschreibung zu den Figuren 1 bis 9 verwiesen, da die dort beschriebenen Anschlagmittel baugleich ausgeführt sind. Die Längstraversen 508, 509 sind entlang einer y-Achse an dem Portalträger 505 verfahrbar und tragen Greifer 513, 514, welche entlang einer x-Achse an den Längstraversen 508, 509 verfahrbar und jeweils um senkrecht auf der Zeichnungsebene und orthogonal zu der x-Achse und der y-Achse ausgerichtet z-Achsen Z513 bzw. Z514 bzw. Hochachsen gegenüber der jeweils zugeordneten Längstraverse 508, 509 verdrehbar bzw. verschwenkbar sind und bevorzugt in Richtung der zugeordneten z-Achsen Z513 bzw. Z514 absenkbar und anhebbar sind. An den Längstraversen 508, 509 ist jeweils zu der Bearbeitungsstation 504 hin an einem Halterarm 515, 516 ein Sensor 517, 518 aufgehängt.

Gemäß einer mit gestrichelten Linien in der Figur 10 dargestellten Ausführungsvariante ist es vorgesehen, dass der bzw. die erwähnten Sensoren nicht an dem Manipulator angeordnet ist bzw. sind, sondern in der Fertigungsanlage feststehend angeordnet ist bzw. sind, so dass der Manipulator die erste Platine und/oder die zweite Platine beim Transport von der Bereitstellungsstation zu der Bearbeitungsstation durch einen Überwachungsbereich 717a bzw. 718a eines Sensors 717 bzw. 718 bewegt. Hierbei sind die Sensoren 717, 718 an einer Trägereinheit 751 angeordnet, welche ortsfest in der Fertigungsanlage 501 verbaut ist.

In Analogie zu der in den Figuren 1 bis 9 gezeigten ersten Ausführungsvariante werden die beiden Platinen 604 und 605 während der Mehrachsroboter 502a die Handhabungseinrichtung 502b aus der Stellung S501 in die Stellung S503 schwenkt an den ersten Anschlag 510 bzw. den zweiten Anschlag 511 schwimmend herangeführt. Hierzu werden die Längstraversen 508 und 509 jeweils in Richtung der mechanischen Anschlagmittel MA verfahren, wobei die um ihre Hochachsen Z513 bzw. Z514 drehbaren Greifer 513, 514 hierbei ein Verschwenken der Platinen 604, 605 erlauben, so dass sich diese mit ihren zu fügenden Längskanten 604a bzw. 605a an das Anschlagmittel MA anlegen können, wie dies in der Stellung S503 gezeigt ist.

Auf dem Weg der Handhabungseinrichtung 502b von der Stellung S503 in die Stellung S505 werden die Platinen 604 und 605 entlang der Längstraversen 508, 509 in Richtung der Sensoren 517, 518 verfahren, wobei die Platinen 604 und 605 mit Hilfe der messenden Sensoren 517, 518 so verfahren werden, dass die Führungskanten 504b und 505b der Platinen 504, 505 auf einer Linie liegen und somit versatzfrei aufeinander ausgerichtet sind.

Sofern die Fertigungsanlage 501 nicht mit den Sensoren 517 und 518 betrieben wird, sondern mit den Sensoren 717 und 718 arbeitet, wird die Handhabungseinrichtung 502b von dem Mehrachsroboter 502a zunächst in die Stellung S505 bewegt. In dieser Stellung S505 werden dann die Platinen 604, 605 über den Sensoren 717 bzw. 718 unabhängig voneinander so verfahren, dass ihre Führungskanten 504b und 505b nach dem Verfahren versatzfrei in einer Linie zueinander ausgerichtet sind.

Aus der Stellung S505 wird die Handhabungseinrichtung 502b dann von dem Mehrachsroboter 502a in die Stellung S506 über die Bearbeitungsstation 504 geschwenkt. Dort werden die Platinen 504, 505 abgelegt, zusammengeschoben und an ihren Längskanten 504a und 505a zu dem maßgeschneiderten Blech 606 verschweißt, welches - wie in der Figur 10 gezeigt - dann aus der Bearbeitungsstation 504 ausgeschleust wird.

Es ist auch vorgesehen, dass der in den Figuren 1 bis 9 gezeigte Manipulator durch einen Mehrachsroboter und eine Handhabungseinrichtung gebildet ist.

### Bezugszeichenliste:

- 1: Fertigungsanlage
- 2: Manipulator
- 3: Bereitstellungsstation
- 4: Bearbeitungsstation
- 5: Portalträger
- 6, 7: Schiene
- 8, 9: Längstraverse
- 10: erster Anschlag bzw. erster Queranschlag
- 10a: gedachte Anschlagkante
- 11: zweiter Anschlag bzw. zweiter Queranschlag
- 11a: gedachte Anschlagkante
- 12: Queranschlag
- 13, 14: Greifer
- 15, 16: Halterarm für 17, 18
- 17: Sensor
- 17a: Überwachungsbereich von 17
- 17b: definierte Position in 17a
- 18: Sensor
- 18a: Überwachungsbereich von 18
- 18b: definierte Position in 18a
- 19: Rollenblock

- 101: maßgeschneidertes Bauteil
- 102, 103: Werkstück
- 104: Platine
- 104a: zu fügende Längskante bzw. Werkstückkante
- 104b: Führungskante
- 105: Platine
- 105a: zu fügende Längskante bzw. Werkstückkante
- 105b: Führungskante
- 106: maßgeschneidertes Blech

- 217: Sensor
- 218: Sensor
- 251: Trägereinheit für 217, 218
- 501: Fertigungsanlage
- 502: Manipulator
- 502a: Mehrachsroboter
- 502b: Handhabungseinrichtung
- 503: Bereitstellungsstation
- 504: Bearbeitungsstation
- 505: Portalträger
- 506, 507: Schiene
- 508, 509: Längstraverse
- 510: erster Anschlag bzw. erster Queranschlag
- 511: zweiter Anschlag bzw. zweiter Queranschlag
- 512: Queranschlag
- 513, 514: Greifer
- 515, 516: Halterarm für 17, 18
- 517: Sensor
- 517a: Überwachungsbereich von 17
- 518: Sensor
- 518a: Überwachungsbereich von 18
- 518b: definierte Position in 18a

- 601: maßgeschneidertes Bauteil
- 602, 603: Werkstück
- 604: Platine
- 604a: zu fügende Längskante bzw. Werkstückkante
- 604b: Führungskante
- 605: Platine
- 605a: zu fügende Längskante bzw. Werkstückkante
- 605b: Führungskante
- 606: maßgeschneidertes Blech

- 717: Sensor
- 717a: Überwachungsbereich von 17
- 718: Sensor
- 718a: Überwachungsbereich von 18
- 751: Trägereinheit
- a: Koordinate der Führungskante der 1. Platine
- b: Koordinate der Führungskante der 2. Platine
- H502a: Hochachse von 502a
- MA: mechanische Anschlagmittel
- V: Versatz von a und b
- VE: Verfahrebene für 102, 103 bzw. 104, 105
- Z13: z-Achse von 13 bzw. Hochachse von 13
- Z513: z-Achse von 513 bzw. Hochachse von 513
- Z14: z-Achse von 14 bzw. Hochachse von 14
- Z514: z-Achse von 514 bzw. Hochachse von 514

## Patentansprüche

1. Verfahren zur Ausrichtung zweier Werkstücke (102, 103; 602, 603) mit dem Manipulator des Anspruchs 12 zur Ausbildung einer Fügeverbindung, wobei das Verfahren folgende Schritte umfasst:
- Einlegen oder Vorhalten von mindestens zwei Werkstücken (102, 103; 602, 603) in einer Bereitstellungsstation (3; 503),
- Greifen des ersten Werkstücks (102; 602) mit dem ersten Greifer (13; 513),
- Greifen des zweiten Werkstücks (103; 603) mit dem zweiten Greifer (14; 514),
- Entnehmen der Werkstücke (102, 103; 602, 603) aus der Bereitstellungsstation (3; 503) und Transport der Werkstücke (102, 103; 602, 603) zu einer Bearbeitungsstation (4; 504),
- wobei in einem Längsausrichtungsschritt das erste Werkstück (103; 603) relativ zu dem zweiten Werkstück (103; 603) entlang mindestens einer der Werkstückkanten (104a, 105a; 604a, 604b) durch Linearbewegung mindestens eines der Greifer (13, 14; 513, 514) relativ zum jeweils anderen Greifer (13, 14; 513, 514) ausgerichtet wird und
- wobei der Längsausrichtungsschritt während des Transports der Werkstücke (102, 103; 602, 603) von der Bereitstellungsstation (3; 503) zu der Bearbeitungsstation (4; 504) ausgeführt wird wobei der erste Greifer (13; 513) und der zweite Greifer (14; 514) an einem gemeinsamen Manipulator (2; 502), bevorzugt an einem gemeinsamen Mehrachs-Roboter angeordnet sind und im Raum mittels dieses Manipulators (2; 502) gemeinsam von der Bereitstellungsstation (3; 503) zur Bearbeitungsstation (4; 504) bewegt werden.

2. Verfahren nach Anspruch 1, **dadurch gekennzeichnet, dass** vor dem Längsausrichtungsschritt in einem Querausrichtungsschritt
- eine erste Bewegung des ersten Greifers (13; 513) in Richtung des zweiten Greifers (14; 514) erfolgt und/oder
- eine erste Bewegung des zweiten Greifers (14; 514) in Richtung des ersten Greifers (13; 513) erfolgt,
- wobei es insbesondere vorgesehen ist, dass bei Bewegung der beiden Greifer (13, 14; 513, 514) die erste und die zweite Bewegung zeitgleich oder nacheinander ausgeführt werden und
- wobei es insbesondere vorgesehen ist, dass der Querausrichtungsschritt während des Transports der Werkstücke (102, 103; 602, 603) von der Bereitstellungsstation (3; 503) zu der Bearbeitungsstation (4; 504) ausgeführt wird.

3. Verfahren nach Anspruch 2, **dadurch gekennzeichnet, dass** beim Querausrichtungsschritt
- das erste Werkstück (102; 602) mit der ersten Bewegung gegen einen ersten Anschlag (10; 510) angefahren wird, und diesen als erste Referenzposition nutzt und
- das zweite Werkstück (103; 603) mit der ersten Bewegung gegen einen zweiten Anschlag (11; 511) angefahren wird, und diesen als zweite Referenzposition nutzt.

4. Verfahren nach wenigstens einem der vorhergehenden Ansprüche, **dadurch gekennzeichnet, dass** nach dem Querausrichtungsschritt in dem Längsausrichtungsschritt eine zweite Bewegung des ersten Greifers (13; 513) in einer von der ersten Bewegung abweichenden, zur ersten Bewegung des ersten Greifers (13; 513) nicht-parallelen Richtung erfolgt und/oder dass eine zweite Bewegung des zweiten Greifers (14; 514) in einer von der ersten Bewegung abweichenden, zur ersten Bewegung des zweiten Greifers (14; 514) nicht-parallelen Richtung erfolgt, wobei es insbesondere vorgesehen ist, dass bei der Bewegung beider Greifer die zweiten Bewegungen zeitgleich ausgeführt werden.

5. Verfahren nach wenigstens einem der vorhergehenden Ansprüche, **dadurch gekennzeichnet, dass** bei dem Längsausrichtungsschritt
- bei der zweiten Bewegung des ersten Werkstücks (102; 602) das erste Werkstück (102; 602) gegen einen dritten Anschlag gefahren wird, und insbesondere diesen als Referenzposition nutzt und
- bei der zweiten Bewegung des zweiten Werkstücks (103; 603) das zweite Werkstück (103; 603) gegen einen vierten Anschlag gefahren wird, und insbesondere diesen als Referenzposition nutzt.

6. Verfahren nach wenigstens einem der Ansprüche 1 bis 5, **dadurch gekennzeichnet, dass** zu Beginn des Längsausrichtungsschritts vor der zweiten Bewegung des ersten Werkstücks (102; 602) und/oder vor der zweiten Bewegung des zweiten Werkstücks (103; 603) mindestens ein Messvorgang umfasst ist, wobei in dem Messvorgang eine erste Referenzposition am ersten Werkstück (102; 602) und eine zweite Referenzposition am zweiten Werkstück (103; 603) durch mindestens einen, vorzugsweise je einen Sensor (17, 18; 217, 218; 517, 518; 717, 718) erfasst wird und ein relativer Abstand in mindestens einer Raumrichtung zwischen der ersten und der zweiten Referenzposition ermittelt und gespeichert wird.

7. Verfahren nach Anspruch 6, **dadurch gekennzeichnet, dass** zum Beenden des Längsausrichtungsschritts mindestens eine Bewegung eines der Greifer zur Ausrichtung eines der Werkstücke (102, 103; 602, 603) gegen ein berührungsloses Referenzmittel, insbesondere einen Sensor (17, 18; 217, 218; 517, 518; 717, 718) oder insbesondere einen virtuellen Anschlag erfolgt.

8. Verfahren nach einem der vorangegangenen Ansprüche, **dadurch gekennzeichnet, dass** nach dem Längsausrichtungsschritt eine Offset-Position der Werkstücke (102, 103; 602, 603) insgesamt gemessen wird und die Greifer (13, 14; 513, 514) während des Transfers um die Offsetposition verfahren werden, wobei dieses Verfahren um die Offsetposition von einer Transportbewegung überlagert ist oder in einer Transportbewegungspause (Stillstand) ausgeführt wird.

9. Verfahren nach einem der vorangegangenen Ansprüche 1 bis 8, **dadurch gekennzeichnet, dass** der Manipulator (2; 502) bei der Ablage der Werkstücke (102, 103; 602, 603) in der Bearbeitungsstation (4; 504) einen vorab gemessenen oder errechneten Offset, bevorzugt in Richtung der x-Achse korrigiert.

10. Verfahren nach einem der vorangegangenen Ansprüche, **dadurch gekennzeichnet, dass** die Werkstücke (102, 103; 602, 603) nach dem Längsausrichtungsschritt in der Bearbeitungsstation (4; 504) aneinander gefügt und insbesondere aneinander geschweißt werden, wobei das Verschweißen insbesondere durch ein Laserschweißverfahren ausgeführt wird.

11. Verfahren nach einem der vorangegangenen Ansprüche, **dadurch gekennzeichnet, dass** die Werkstücke (102, 103; 602, 603) als flächige Platinen (104, 105; 604, 605), insbesondere Blechplatinen und bevorzugt Blechplatinen unterschiedlicher Dicke und/oder unterschiedlichen Materials ausgebildet sind.

12. Manipulator (2; 502) zum Transport der Werkstücke (102, 103) von der Bereitstellungsstation (3) in die Bearbeitungsstation (4) und zur Ausführung eines Verfahrens nach einem der vorangegangenen Ansprüche, wobei der Manipulator (2; 502) einen ersten Greifer (13; 513) und einen zweiten Greifer (14; 514) umfasst,
- wobei der Manipulator (2; 502) mechanische Anschlagmittel (MA) zur Kontaktierung der Werkstücke, insbesondere einen Rollenblock (19) umfasst,
- wobei die mechanischen Anschlagmittel (MA), insbesondere der Rollenblock (19) zwischen den Greifern (13, 14; 513, 514) angeordnet ist,
- wobei die mechanischen Anschlagmittel (MA) zu dem ersten Greifer (13; 513) hin eine Anschlagkante (10a) definieren, wobei es insbesondere vorgesehen ist, dass der Rollenblock (19) zu dem ersten Greifer (13; 513) hin wenigstens drei Rollen umfasst, welche mit ihren Laufflächen die Anschlagkante (10a) definieren,
- wobei die mechanischen Anschlagmittel (MA) zu dem zweiten Greifer (14; 514) hin eine Anschlagkante (11a) definieren, wobei es insbesondere vorgesehen ist, dass der Rollenblock (19) zu dem zweiten Greifer (14; 514) hin wenigstens drei weitere Rollen umfasst, welche mit ihren Laufflächen die Anschlagkante (11a) definieren,
- wobei die definierten Anschlagkanten (10a, 11a) parallel zueinander ausgerichtet sind,
- wobei die Greifer (13, 14; 513, 514) jeweils parallel zu den Anschlagkanten (10a, 11a) längs in Richtung einer x-Achse verfahrbar sind,
- wobei die Greifer (13, 14; 513, 514) jeweils quer zu den Anschlagkanten (10a, 11a) in Richtung einer y-Achse verfahrbar sind und
- wobei die Greifer um eine senkrecht zu der x-Richtung und der y-Richtung stehende Hochachse (Z13, Z14; Z513, Z514) verdrehbar sind,
- wobei die Greifer (13, 14; 513, 514) in Richtung der quer verlaufenden y-Achse pneumatisch angetrieben sind und/oder
- mindestens einer der Greifer (13, 14; 513, 514) in Richtung der längs verlaufenden x-Achse durch einen Servomotor oder einen Schrittmotor angetrieben ist.

13. Manipulator nach Anspruch 12,
- dass an dem Manipulator (2; 502) jedem Greifer (13, 14; 513, 514) wenigstens ein Sensor (17, 18; 217, 218; 517, 518; 717, 718), insbesondere ein messender Sensor zugeordnet ist, wobei der Sensor (17, 18; 217, 218; 517, 518; 717, 718) insbesondere als Flächensensor ausgebildet ist, welcher eine Fläche überwacht, und/oder
- dass wenigstens einer der Sensoren (17, 18; 517, 518) an dem Manipulator (2; 502) fixiert ist und mit dem Manipulator (2; 502) verfahrbar ist und/oder dass wenigstens einer der Sensoren (217, 218; 717, 718) ein unverfahrbarer Bestandteil der Fertigungsanlag (1; 501) ist und/oder
- dass die insbesondere als Rollenblock (19) ausgebildeten mechanischen Anschlagmittel (MA) an jeder Anschlagkante (10a, 11a) in Längsrichtung in einen ersten Abschnitt und einen zweiten Abschnitt zweigeteilt sind und der erste und der zweite Abschnitt jeweils galvanisch voneinander getrennt sind, so dass ein an beiden Blockabschnitten anliegendes, elektrisch leitfähiges Werkstück (102, 103; 602, 603) elektrisch detektierbar ist.

14. Manipulator nach Anspruch 12 oder 13, **dadurch gekennzeichnet, dass** der Manipulator (2; 502) einen Portalträger (5) umfasst, wobei der Portalträger (5) an den Manipulator (2; 502) angeflanscht ist und wobei der Portalträger (5) zwischen dem Manipulator (2; 502) und den beiden Greifern (13; 513; 14; 514) angeordnet ist, wobei der Rollenblock (19) ebenfalls an den Manipulator (2; 502) angeflanscht ist, derart, dass der Manipulator (2; 502) die Greifer (13; 513; 14; 514) und der Rollenblock (19) gemeinsam bewegt und derart, dass der erste Greifer (13; 513) das erste Werkstück (102) und der zweite Greifer (14; 514) das zweite Werkstück (103) unabhängig voneinander relativ zu dem Portalträger (5) und relativ zu dem an dem Portalträger (5) fixierten Rollenblock (19) bewegen.

## Claims

1. Method for aligning two workpieces (102, 103; 602, 603) using the manipulator of Claim 12 for forming a join, wherein the method comprises the following steps:
- placing or keeping available at least two workpieces (102, 103; 602, 603) in a preparation station (3; 503);
- gripping the first workpiece (102; 602) by the first gripper (13; 513);
- gripping the second workpiece (103; 603) by the second gripper (14; 514);
- retrieving the workpieces (102, 103; 602, 603) from the preparation station (3; 503) and transporting the workpieces (102, 103; 602, 603) to a machining station (4; 504);
- wherein, in a longitudinal alignment step, the first workpiece (103; 603) is aligned relative to the second workpiece (103; 603) along at least one of the workpiece edges (104a, 105a; 604a, 604b) by a linear movement of at least one of the grippers (13, 14; 513, 514) relative to the respective other gripper (13, 14; 513, 514); and
- wherein the longitudinal alignment step is carried out while transporting the workpieces (102, 103; 602, 603) from the preparation station (3; 503) to the machining station(4; 504); wherein the first gripper (13; 513) and the second gripper (14; 514) are disposed on a common manipulator (2; 502), preferably on a common multi-axis robot, and are conjointly moved in space from the preparation station (3; 503) to the machining station (4; 504) by means of this manipulator (2; 502).

2. Method according to Claim 1, **characterized in that** in a transverse alignment step, prior to the longitudinal alignment step,
- a first movement of the first gripper (13; 513) in the direction of the second gripper (14; 514) is performed; and/or
- a first movement of the second gripper (14; 514) in the direction of the first gripper (13; 513) is performed;
- wherein it is provided in particular that when moving the two grippers (13, 14; 513, 514) the first and the second movement are carried out simultaneously or successively; and
- wherein it is provided in particular that the transverse alignment step is carried out while transporting the workpieces (102, 103; 602, 603) from the preparation station (3; 503) to the machining station (4; 504).

3. Method according to Claim 2, **characterized in that** in the transverse alignment step
- the first workpiece (102; 602) by way of the first movement is moved against a first detent (10; 510) and utilizes the latter as a first reference position; and
- the second workpiece (103; 603) by way of the first movement is moved against a second detent (11; 511) and utilizes the latter as a second reference position.

4. Method according to at least one of the preceding claims, **characterized in that**, after the transverse alignment step, in the longitudinal alignment step a second movement of the first gripper (13; 513) in a direction which deviates from the first movement and is not parallel to the first movement of the first gripper (13; 513) is performed; and/or **in that** a second movement of the second gripper (14; 514) in a direction which deviates from the first movement and is not parallel to the first movement of the second gripper (14; 514) is performed, wherein it is provided in particular that when moving the two grippers the second movements are carried out simultaneously.

5. Method according to at least one of the preceding claims, **characterized in that** in the longitudinal alignment step
- in the second movement of the first workpiece (102; 602), the first workpiece (102; 602) is moved against a third detent and in particular utilizes the latter as a reference position; and
- in the second movement of the second workpiece (103; 603), the second workpiece (103; 603) is moved against a fourth detent and in particular utilizes the latter as a reference position.

6. Method according to at least one of Claims 1 to 5, **characterized in that** at the beginning of the longitudinal alignment step, prior to the second movement of the first workpiece (102; 602) and/or prior to the second movement of the second workpiece (103; 603), at least one measuring procedure is included, wherein in the measuring procedure a first reference position on the first workpiece (102; 602), and a second reference position on the second workpiece (103; 603), are detected by at least one, preferably in each case one, sensor (17, 18; 217, 218; 517, 518; 717, 718), and a relative spacing in at least one spatial direction between the first and the second reference position is ascertained and memorized.

7. Method according to Claim 6, **characterized in that**, for terminating the longitudinal alignment step, at least one movement of one of the grippers for aligning one of the workpieces (102, 103; 602, 603) in relation to a contactless reference means, in particular a sensor (17, 18; 217, 218; 517, 518; 717, 718), or in particular a virtual detent, is performed.

8. Method according to one of the preceding claims, **characterized in that**, after the longitudinal alignment step, an offset position of the workpieces (102, 103; 602, 603) is measured overall, and the grippers (13, 14; 513, 514) during transfer are displaced by the offset position, wherein this displacement by the offset position is superimposed by a transportation movement, or is carried out in a transportation movement interval (standstill).

9. Method according to one of preceding Claims 1 to 8, **characterized in that** the manipulator (2; 502) when depositing the workpieces (102, 103; 602, 603) in the machining station (4; 504) corrects a previously measured or calculated offset, preferably in the direction of the x-axis.

10. Method according to one of the preceding claims, **characterized in that** the workpieces (102, 103; 602, 603) after the longitudinal alignment step, are joined to one another, in particular welded to one another, in the machining station (4; 504), wherein welding is in particular carried out by a laser welding method.

11. Method according to one of the preceding claims, **characterized in that** the workpieces (102, 103; 602, 603) are configured as planar blanks (104, 105; 604, 605), in particular sheet-metal blanks, and preferably sheet-metal blanks of dissimilar thickness and/or dissimilar material.

12. Manipulator (2; 502) for transporting the workpieces (102, 103) from the preparation station (3) into the machining station (4), and for carrying out a method according to one of the preceding claims, wherein the manipulator (2; 502) comprises a first gripper (13; 513) and second gripper (14; 514),
- wherein the manipulator (2; 502) comprises mechanical detent means (MA) for contacting the workpieces, in particular a roller block (19),
- wherein the mechanical detent means (MA), in particular the roller block (19), is disposed between the grippers (13, 14; 513, 514),
- wherein the mechanical detent means (MA) define a detent edge (10a) towards the first gripper (13; 513), wherein it is in particular provided that the roller block (19) comprises at least three rollers towards the first gripper (13; 513), which rollers by way of the running surfaces of the latter define the detent edge (10a),
- wherein the mechanical detent means (MA) define a detent edge (11a) towards the second gripper (14; 514), wherein it is in particular provided that the roller block (19) comprises at least three further rollers towards the second gripper (14; 514), which further rollers by way of the running surfaces of the latter define the detent edge (11a),
- wherein the defined detent edges (10a, 11a) are co-aligned to be parallel,
- wherein the grippers (13, 14; 513, 514) are in each case displaceable longitudinally in the direction of an x-axis, parallel to the detent edges (10a, 11a),
- wherein the grippers (13, 14; 513, 514) are in each case displaceable in the direction of a y-axis, transversely to the detent edges (10a, 11a), and
- wherein the grippers are rotatable about a vertical axis (Z13, Z14; Z513, Z514) which is perpendicular to the x-direction and the y-direction,
- wherein the grippers (13, 14; 513, 514) are pneumatically driven in the direction of the transversely running y-axis, and/or
- at least one of the grippers (13, 14; 513, 514) is driven by a servomotor or a stepper motor in the direction of the longitudinally running x-axis.

13. Manipulator according to Claim 12,
- on the manipulator (2; 502), each gripper (13, 14; 513, 514) is assigned at least one sensor (17, 18; 217, 218; 517, 518; 717, 718), in particular a measuring sensor, wherein the sensor (17, 18; 217, 218; 517, 518; 717, 718) is in particular configured as an area sensor which monitors an area, and/or
- at least one of the sensors (17, 18; 517, 518) is fixed to the manipulator (2; 502) and is displaceable with the manipulator (2; 502), and/or at least one of the sensors (217, 218; 717, 718) is a non-displaceable constituent part of the production system (1; 501), and/or
- the mechanical detent means (MA), configured in particular as a roller block (19), on each detent edge (10a, 11a) are divided into two in the longitudinal direction, so as to form a first portion and a second portion, and the first and the second portion are in each case galvanically isolated from one another in such a way that an electrically conductive workpiece (102, 103; 602, 603) resting on both block portions is able to be electrically detected.

14. Manipulator according to Claim 12 or 13, **characterized in that** the manipulator (2; 502) comprises a gantry support (5), wherein the gantry support (5) is flange-mounted to the manipulator (2; 502), and wherein the gantry support (5) is disposed between the manipulator (2; 502) and the two grippers (13; 513; 14; 514); wherein the roller block (19) is likewise flange-mounted to the manipulator (2; 502) in such a manner that the manipulator (2; 502) moves the grippers (13; 513; 14; 514) and the roller block (19) conjointly in such a manner that the first gripper (13; 513) moves the first workpiece (102), and the second gripper (14; 514) moves the second workpiece (103), in a mutually independent manner relative to the gantry support (5) and relative to the roller block (19) fixed to the gantry support (5).

## Revendications

1. Procédé d'alignement de deux pièces (102, 103 ; 602, 603) avec le manipulateur de la revendication 12 pour réaliser un assemblage, le procédé comprenant les étapes suivantes :
- la mise en place ou le maintien d'au moins deux pièces (102, 103 ; 602, 603) dans un poste d'approvisionnement (3 ; 503),
- la saisie de la première pièce (102 ; 602) avec le premier préhenseur (13 ; 513),
- la saisie de la deuxième pièce (103 ; 603) avec le deuxième préhenseur (14 ; 514),
- l'extraction des pièces (102, 103 ; 602, 603) du poste d'approvisionnement (3 ; 503) et le transport des pièces (102, 103 ; 602, 603) vers un poste de traitement (4 ; 504),
- dans une étape d'alignement longitudinal, la première pièce (103 ; 603) étant alignée par rapport à la deuxième pièce (103 ; 603) le long d'au moins l'un des bords de pièce (104a, 105a ; 604a, 604b) par un mouvement linéaire d'au moins l'un des préhenseurs (13, 14 ; 513, 514) par rapport à l'autre préhenseur respectif (13, 14 ; 513, 514), et
- l'étape d'alignement longitudinal étant exécutée pendant le transport des pièces (102, 103 ; 602, 603) du poste d'approvisionnement (3 ; 503) au poste de traitement (4 ; 504),
le premier préhenseur (13 ; 513) et le deuxième préhenseur (14 ; 514) étant agencés sur un manipulateur commun (2 ; 502), de préférence sur un robot multiaxes commun, et étant déplacés ensemble dans l'espace au moyen de ce manipulateur (2 ; 502) du poste d'approvisionnement (3 ; 503) au poste de traitement (4 ; 504).

2. Procédé selon la revendication 1, **caractérisé en ce qu'**avant l'étape d'alignement longitudinal, lors d'une étape d'alignement transversal,
- un premier mouvement du premier préhenseur (13 ; 513) en direction du deuxième préhenseur (14 ; 514) est effectué et/ou
- un premier mouvement du deuxième préhenseur (14 ; 514) en direction du premier préhenseur (13 ; 513) est effectué,
- il étant notamment prévu que, lors du mouvement des deux préhenseurs (13, 14 ; 513, 514), le premier et le deuxième mouvement sont exécutés simultanément ou successivement, et
il est notamment prévu que l'étape d'alignement transversal est exécutée pendant le transport des pièces (102, 103 ; 602, 603) du poste d'approvisionnement (3 ; 503) au poste de traitement (4 ; 504).

3. Procédé selon la revendication 2, **caractérisé en ce que**, lors de l'étape d'alignement transversal,
- la première pièce (102 ; 602) est amenée avec le premier mouvement contre une première butée (10 ; 510) et utilise celle-ci en tant que première position de référence et
- la deuxième pièce (103 ; 603) est amenée avec le premier mouvement contre une deuxième butée (11 ; 511) et utilise celle-ci en tant que deuxième position de référence.

4. Procédé selon au moins l'une quelconque des revendications précédentes, **caractérisé en ce qu'**après l'étape d'alignement transversal, lors de l'étape d'alignement longitudinal, un deuxième mouvement du premier préhenseur (13 ; 513) est effectué dans une direction différente du premier mouvement, non parallèle au premier mouvement du premier préhenseur (13 ; 513) et/ou **en ce qu'**un deuxième mouvement du deuxième préhenseur (14 ; 514) est effectué dans une direction différente du premier mouvement, non parallèle au premier mouvement du deuxième préhenseur (14 ; 514), il étant notamment prévu que, lors du mouvement des deux préhenseurs, les deuxièmes mouvements sont exécutés simultanément.

5. Procédé selon au moins l'une quelconque des revendications précédentes, **caractérisé en ce que**, lors de l'étape d'alignement longitudinal,
- lors du deuxième mouvement de la première pièce (102 ; 602), la première pièce (102 ; 602) est amenée contre une troisième butée, et notamment utilise celle-ci en tant que position de référence, et
- lors du deuxième mouvement de la deuxième pièce (103 ; 603), la deuxième pièce (103 ; 603) est amenée contre une quatrième butée, et notamment utilise celle-ci en tant que position de référence.

6. Procédé selon au moins l'une quelconque des revendications 1 à 5, **caractérisé en ce qu'**au début de l'étape d'alignement longitudinal, avant le deuxième mouvement de la première pièce (102 ; 602) et/ou avant le deuxième mouvement de la deuxième pièce (103 ; 603), au moins une opération de mesure est comprise ; dans l'opération de mesure, une première position de référence sur la première pièce (102 ; 602) et une deuxième position de référence sur la deuxième pièce (103 ; 603) étant détectées par au moins un, de préférence respectivement un capteur (17, 18 ; 217, 218 ; 517, 518 ; 717, 718) et une distance relative dans au moins une direction spatiale entre la première et la deuxième position de référence étant déterminée et mémorisée.

7. Procédé selon la revendication 6, **caractérisé en ce que**, pour terminer l'étape d'alignement longitudinal, au moins un mouvement de l'un des préhenseurs pour aligner l'une des pièces (102, 103 ; 602, 603) contre un moyen de référence sans contact, notamment un capteur (17, 18 ; 217, 218 ; 517, 518 ; 717, 718) ou notamment une butée virtuelle est effectué.

8. Procédé selon l'une quelconque des revendications précédentes, **caractérisé en ce qu'**après l'étape d'alignement longitudinal, une position de décalage des pièces (102, 103 ; 602, 603) est mesurée globalement et les préhenseurs (13, 14 ; 513, 514) sont déplacés autour de la position de décalage pendant le transfert, ce déplacement autour de la position de décalage étant superposé à un mouvement de transport ou étant exécuté pendant une pause du mouvement de transport (arrêt).

9. Procédé selon l'une quelconque des revendications 1 à 8 précédentes, **caractérisé en ce que**, lors du dépôt des pièces (102, 103 ; 602, 603) dans le poste de traitement (4 ; 504), le manipulateur (2 ; 502) corrige un décalage préalablement mesuré ou calculé, de préférence dans la direction de l'axe x.

10. Procédé selon l'une quelconque des revendications précédentes, **caractérisé en ce qu'**après l'étape d'alignement longitudinal, les pièces (102, 103 ; 602, 603) sont assemblées l'une à l'autre dans le poste de traitement (4 ; 504), et notamment soudées l'une à l'autre, le soudage étant notamment exécuté par un procédé de soudage laser.

11. Procédé selon l'une quelconque des revendications précédentes, **caractérisé en ce que** les pièces (102, 103 ; 602, 603) sont réalisées sous forme de platines planes (104, 105 ; 604, 605), notamment de platines en tôle et de préférence de platines en tôle d'épaisseur différente et/ou de matériau différent.

12. Manipulateur (2 ; 502) pour le transport des pièces (102, 103) du poste d'approvisionnement (3) au poste de traitement (4) et pour l'exécution d'un procédé selon l'une quelconque des revendications précédentes, le manipulateur (2 ; 502) comprenant un premier préhenseur (13 ; 513) et un deuxième préhenseur (14 ; 514),
- le manipulateur (2 ; 502) comprenant des moyens de butée mécanique (MA) pour la mise en contact des pièces, comprenant notamment un bloc de galets (19),
- les moyens de butée mécanique (MA), notamment le bloc de galets (19), étant agencés entre les préhenseurs (13, 14 ; 513, 514),
- les moyens de butée mécanique (MA) définissant, vers le premier préhenseur (13 ; 513), un bord de butée (10a), il étant notamment prévu que le bloc de galets (19) comprend, vers le premier préhenseur (13 ; 513), au moins trois galets qui définissent, par leurs surfaces de roulement, le bord de butée (10a),
- les moyens de butée mécaniques (MA) définissant, vers le deuxième préhenseur (14 ; 514), un bord de butée (11a), il étant notamment prévu que le bloc de galets (19) comprend, vers le deuxième préhenseur (14 ; 514), au moins trois autres galets qui définissent, par leurs surfaces de roulement, le bord de butée (11a),
- les bords de butée définis (10a, 11a) étant alignés parallèlement entre eux,
- les préhenseurs (13, 14 ; 513, 514) étant respectivement déplaçables parallèlement aux bords de butée (10a, 11a) longitudinalement dans la direction d'un axe x,
- les préhenseurs (13, 14 ; 513, 514) étant respectivement déplaçables transversalement aux bords de butée (10a, 11a) dans la direction d'un axe y, et
- les préhenseurs pouvant être tournés autour d'un axe vertical (Z13, Z14 ; Z513, Z514) perpendiculaire à la direction x et à la direction y,
- les préhenseurs (13, 14 ; 513, 514) étant entraînés pneumatiquement dans la direction de l'axe y s'étendant transversalement et/ou
- au moins l'un des préhenseurs (13, 14 ; 513, 514) étant entraîné par un servomoteur ou un moteur pas à pas dans la direction de l'axe x s'étendant longitudinalement.

13. Manipulateur selon la revendication 12,
- en ce que, sur le manipulateur (2 ; 502), à chaque préhenseur (13, 14 ; 513, 514) est associé au moins un capteur (17, 18 ; 217, 218 ; 517, 518 ; 717, 718), notamment un capteur de mesure, le capteur (17, 18 ; 217, 218 ; 517, 518 ; 717, 718) étant notamment réalisé sous forme de capteur de surface qui surveille une surface, et/ou
- en ce qu'au moins l'un des capteurs (17, 18 ; 517, 518) est fixé sur le manipulateur (2 ; 502) et peut être déplacé avec le manipulateur (2 ; 502) et/ou en ce qu'au moins l'un des capteurs (217, 218 ; 717, 718) est un constituant non déplaçable de l'installation de fabrication (1 ; 501), et/ou
- en ce que les moyens de butée mécaniques (MA), réalisés notamment sous forme de bloc de galets (19), sont divisés en deux dans la direction longitudinale en une première section et une deuxième section au niveau de chaque bord de butée (10a, 11a), et la première et la deuxième section sont respectivement séparées galvaniquement l'une de l'autre, de telle sorte qu'une pièce (102, 103 ; 602, 603) électriquement conductrice, s'appliquant sur les deux sections de bloc peut être détectée électriquement.

14. Manipulateur selon la revendication 12 ou 13, **caractérisé en ce que** le manipulateur (2 ; 502) comprend un support de portique (5), le support de portique (5) étant bridé sur le manipulateur (2 ; 502) et le support de portique (5) étant agencé entre le manipulateur (2 ; 502) et les deux préhenseurs (13 ; 513 ; 14 ; 514), le bloc de galets (19) étant également bridé sur le manipulateur (2 ; 502), de telle sorte que le manipulateur (2 ; 502) déplace les préhenseurs (13 ; 513 ; 14 ; 514) et le bloc de galets (19) ensemble et de telle sorte que le premier préhenseur (13 ; 513) déplace la première pièce (102) et le deuxième préhenseur (14 ; 514) déplace la deuxième pièce (103) indépendamment l'une de l'autre par rapport au support de portique (5) et par rapport au bloc de galets (19) fixé sur le support de portique (5).
